(19) Europäisches Patentamt
European Patent Office
Office européen des brevets

(11) EP 2 669 335 B1

(12) **EUROPEAN PATENT SPECIFICATION**

(45) Date of publication and mention of the grant of the patent:
**02.11.2016 Bulletin 2016/44**

(21) Application number: **12739330.4**

(22) Date of filing: **23.01.2012**

(51) Int Cl.:
***C08L 101/00*** *(2006.01)* ***C08F 216/12*** *(2006.01)*
***C08F 226/06*** *(2006.01)* ***C09K 21/02*** *(2006.01)*
***C09K 21/10*** *(2006.01)* ***C09K 21/12*** *(2006.01)*
***C08K 5/00*** *(2006.01)*

(86) International application number:
**PCT/JP2012/051338**

(87) International publication number:
**WO 2012/102235 (02.08.2012 Gazette 2012/31)**

(54) **FLAME-RETARDANT RESIN COMPOSITION**

FLAMMHEMMENDE HARZZUSAMMENSETZUNG

COMPOSITION DE RÉSINE IGNIFUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2011 JP 2011013231**
**25.01.2011 JP 2011013232**
**25.01.2011 JP 2011013233**

(43) Date of publication of application:
**04.12.2013 Bulletin 2013/49**

(73) Proprietor: **Kaneka Corporation**
**Osaka-shi, Osaka 530-8288 (JP)**

(72) Inventors:
- **TAKETANI, Shuji**
**Settsu-shi**
**Osaka 566-0072 (JP)**
- **YAMAMOTO, Tetsuro**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(56) References cited:
**EP-A2- 0 378 315** **JP-A- 2006 063 258**
**JP-A- 2009 144 042**

- **DATABASE WPI Week 200624 Thomson Scientific, London, GB; AN 2006-224676 XP002731581, & JP 2006 063258 A (TOSHIBA CHEM CORP) 9 March 2006 (2006-03-09)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a flame-retardant thermoplastic resin composition having high flame retardance and being capable of providing molded articles with excellent reflow heat resistance and chemical resistance.

### Background Art

Recently, many synthetic resin materials have been used for housings, parts or connectors of office automation equipment or household electrical appliances, automobile parts, building materials, household articles, textile goods, and the like. The synthetic resin materials, however, are flammable, and thus the flame retardance is often required, in order to secure safety against fire in, particularly, the home appliance, electric, and office automation-related parts. For that reason, addition of various flame retardants has been studied.

Addition of both a halogen flame retardant, typified by brominated polystyrene or the like, and an antimony flame retardant promoter, typified by antimony trioxide or the like has been conventionally known as a method for flame-retarding a resin, but according to the method, there is concern about whether toxic gas is generated when it is burned, or regulations against the resin composition including the halogen flame retardant become gradually stricter. For these reasons, developments of non-halogen flame retardants have been activated.

There are methods using a metal hydroxide or a phosphorus compound as a method for flame-retarding a resin composition using no halogen flame retardant. According to the method using the metal hydroxide, a desired flame-retarding property can be obtained only when a large amount of the flame retardant is used, and when it is used in a large amount, the properties, which inherently exist in the resin, are problematically reduced.

Methods using an organic (condensed) phosphate ester compound or red phosphorus have been conventionally known as the method for flame-retarding a resin using the phosphorus compound. The organic (condensed) phosphate ester having a comparatively low molecular weight is insufficient in terms of the volatility, sublimability and heat resistance, and if the resin composition is used at a high temperature for a long period of time, the flame retardant problematically bleeds out. The red phosphorus has a defect in which toxic gas, phosphine gas, is generated while the resin composition is dried or molded.

In a high heat-resistant nylon resin, which requires a processing temperature of 300°C or higher, there is currently no phosphorus flame retardant which can withstand such a processing temperature, and only a metal salt of dialkyl phosphinate, which is called "high heat-resistant flame retardant," has a defect of corroding metal parts such as a cylinder or screw of an extruder or injection molding machine. In addition, when the high heat-resistant nylon resin composition is utilized for use of connectors or the like, it is necessary to have excellent reflow heat resistance, but non-halogen flame retardants capable of exhibiting sufficient reflow heat resistance have not been obtained yet.

Patent Document 1 discloses a method for producing a flame-retardant triallyl isocyanurate prepolymer, including the step of polymerizing triallyl isocyanurate to obtain a prepolymer, wherein 6H-dibenz[c,e][1,2]oxaphosphorine (formula weight:216.17) is existed as a polymerization regulator in an amount of 1 to 200% by weight of the triallyl isocyanurate, together with a polymerization initiator.

In addition, Patent Document 2 discloses a flame-retardant polyester resin including 10 to 80 parts by weight of an organic phosphorus flame retardant having a specific structure, and 1 to 30 parts by weight of an amorphous resin, the parts by weight being based on 100 parts by weight thermoplastic polyester resin. In such compositions, the bleeding out property of the organic phosphorus flame retardant is improved, but they have room for further improvement in a bleeding out property and physical properties at high temperature and moisture conditions.

JP 2006063258 (A) describes a halogen-free flame-retardant resin composition comprising (A) a crosslinkable functional group-bearing modified polyphenylene ether resin, (B) a crosslinking agent, (C) 3-65 pts. mass, based on a total of 100 pts. mass of the components (A) and (B), of a 9,10-dihydro-9-oxa-10-phosphaphenanthrene-10-oxide derivative and (D) 5-300 pts. mass of zinc borate.

### Citation List

#### Patent Literatures

Patent Document 1: JP-A No. H02-182707
Patent Document 2: WO 2007/040075

Summary of Invention

Technical Problem

The present invention aims at providing a flame-retardant resin composition having high flame-retardant and capable of providing a molded article having excellent mold processability, reflow heat resistance, and chemical resistance.

Solution to Problem

The present inventors have repeated painstaking studies about a method in which the same starting materials as used in the flame-retardant triallyl isocyanurate prepolymer in Patent Document 1 are applied to a flame retardant for a thermoplastic resin, i.e., a heat-formable resin composition, to which preferable properties as an additive are added, which has further improved flame-retardant and improved formability, and which can provide a molded article whose chemical resistance is not reduced. They also have been repeated painstaking studies about a flame retardant, whose starting materials are the same as those for the flame-retardant triallyl isocyanurate prepolymer in Patent Document 1, which has a chemical structure in which not only the flame retardance itself is improved but also, when the flame retardant is added to a thermoplastic resin, the flame retardance of the resulting resin can also be improved, and which can provide a molded article whose reflow heat resistance and chemical resistance are not reduced from a composition including the retardant.

As a result, they have found that a flame-retardant resin composition including a thermoplastic resin, a flame retardant having a specific structure, and at least one kind compound selected from the group consisting of specific flame retardant promoters, specific impact modifiers, and specific layered compounds has high flame retardance, and has excellent mold processability, reflow heat resistance, and chemical resistance.

The present invention relates to a flame retardant resin composition as defined in the claims.

Thus, the present invention relates to a flame-retardant resin composition including (A) a thermoplastic resin; (B) a flame retardant including a reaction product of at least one nitrogen-containing compound selected from the group of nitrogen-containing compounds represented by the following group (1) of the structure formulae and a phosphorus-containing compound represented by the following structure formula (2), which is insoluble in toluene and has a content of phosphorus atoms of 5.0 to 10.0% by weight; and (C) at least one component selected from the group consisting of a flame retardant promoter ($C_x$), an impact modifier ($C_y$), and a layered compound ($C_z$);

[C. 1]

Group (1) of the structure formulae

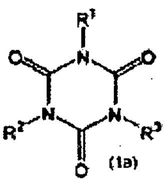
(1a)

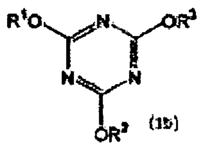
(1b)

wherein two or more of $R^1$, $R^2$, and $R^3$ are an unsaturated bond-containing group and the others are a hydrogen atom or an organic group other than the unsaturated bond-containing group;

[C. 2]

Structure formula (2)

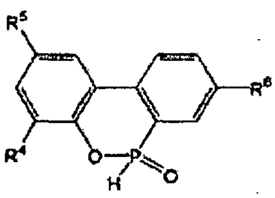

wherein $R^4$, $R^5$, and $R^6$ are the same or different, and each is a hydrogen atom, an alkyl group, a cycloalkyl group, an

aryl group, or an aralkyl group as defined in claim 1.

A preferable aspect relates to the flame-retardant resin composition described above, wherein the flame retardant (B) has a weight average molecular weight ($M_w$) of 2,000 to 10,000.

In the thermoplastic resin composition described above, the flame retardant (B) includes a polymer having at least one kind of repeating units selected from first to third groups of repeating units represented by the following groups (3) to (5) of the structure formulae respectively

[C. 3]

Group (3) of the structure formulae

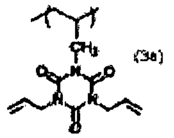
(3a)

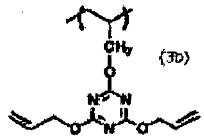
(3b)

[C. 4]

Group (4) of the structure formulae

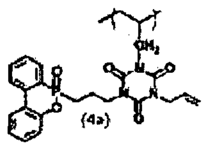
(4a)

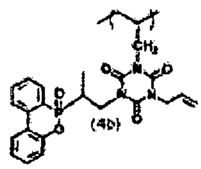
(4b)

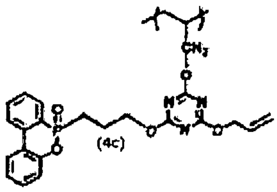
(4c)

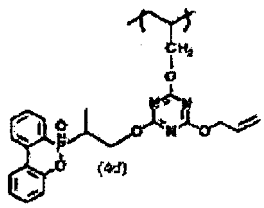
(4d)

[C. 5]

Group (5) of the structure formulae

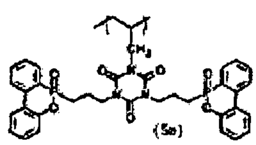
(5a)

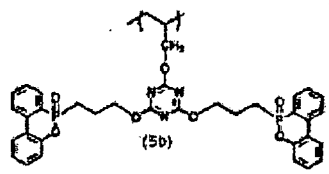
(5b)

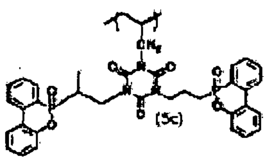
(5c)

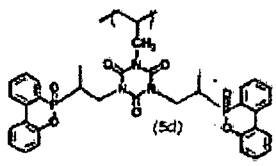
(5d)

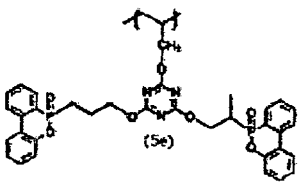
(5e)

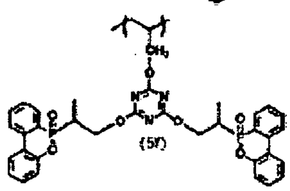
(5f)

A more preferable embodiment relates to the flame-retardant resin composition described above, wherein the flame retardant (B) includes a cross-linked component, the cross-linked component being contained in a proportion of

1% by weight or more of the total amount of the flame retardant (B).

A more preferable embodiment relates to the flame-retardant resin composition described above, wherein the cross-linked component is a component which is insoluble in chloroform.

A more preferable embodiment relates to the flame-retardant resin composition described above, wherein the flame retardant (B) includes a polymer having at least one kind of repeating units selected from the first to third groups of repeating units represented by the above-mentioned groups (3) to (5) of the structure formulae respectively and at least one kind of cross-linked structure selected from the group of cross-linked structures represented by the following groups (6) and (7) of the structure formulae respectively, which is insoluble in toluene, and has a cross-linked component insoluble in chloroform in a proportion of 1% by weight or more and phosphorus atoms in a content of 5.0 to 10.0% by weight

[C. 6]

Group (6) of the structure formulae

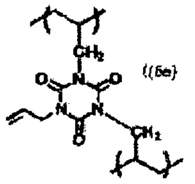
(6a)

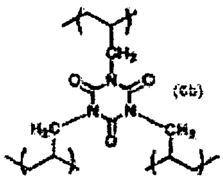
(6b)

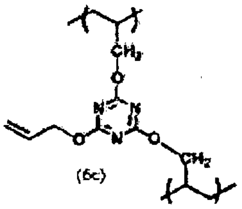
(6c)

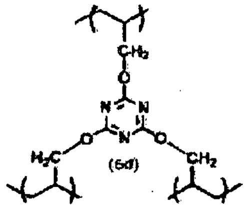
(6d)

[C. 7]

Group (7) of the structure formulae

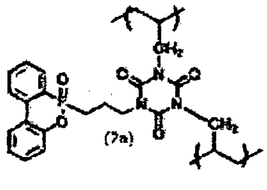
(7a)

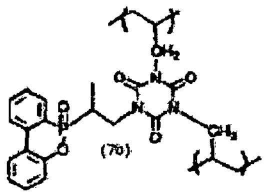
(7b)

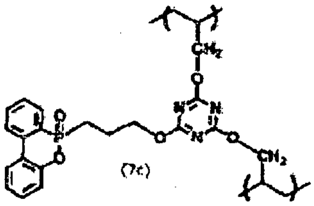
(7c)

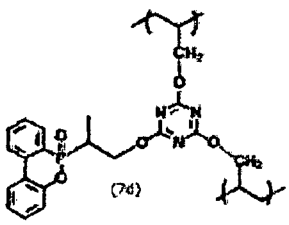
(7d)

A more preferable embodiment relates to the flame-retardant resin composition, wherein the thermoplastic resin (A) is at least one resin selected from the group consisting of polyester resins, polyamide resins, polycarbonate resins, and modified polyphenylene oxide resins, and the component (C) is the flame retardant promoter ($C_x$).

A further preferable embodiment relates to the flame-retardant resin composition described above, wherein the flame retardant promoter ($C_x$) is at least one compound selected from the group consisting of nitrogen-containing compounds, metal hydroxides, metal oxides, boron compounds, tin compounds, and zinc compounds.

A more preferable embodiment relates to the flame-retardant resin composition described above, wherein the thermoplastic resin (A) is a thermoplastic polyamide resin having a melting point of 240°C or higher, and the component (C) is the impact modifier ($C_y$).

A more preferable embodiment relates to the flame-retardant resin composition described above, wherein the thermoplastic resin (A) is a thermoplastic polyamide resin having a melting point of 240°C or higher, and the component (C) is the layered compound ($C_z$).

A further preferable embodiment relates to the flame-retardant resin composition described above, wherein the thermoplastic polyamide resin having a melting point of 240°C or higher is at least one resin selected from the group consisting of nylon 46, nylon 4T, modified nylon 6T, nylon 9T, and nylon XD6.

A further preferable embodiment relates to the flame-retardant resin composition described above, wherein the impact modifier ($C_y$) is at least one modifier selected from the group consisting of polyolefin impact modifiers, hydrogenated styrene thermoplastic elastomers, polyester elastomers, polyamide elastomers, butadiene impact modifiers, acrylic impact modifiers, and silicone impact modifiers.

A further preferable embodiment relates to the flame-retardant resin composition described above, wherein the layered compound ($C_z$) is treated with a polyether compound having a cyclic hydrocarbon group.

A further preferable embodiment relates to the flame-retardant resin composition described above, wherein the polyether compound having a cyclic hydrocarbon group is a polyether compound having units represented by the following general formula (8)

[C. 8]

Structure formula (8)

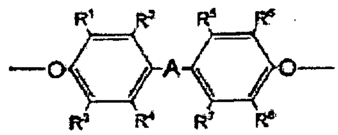

wherein -A- is -O-, -S-, -SO-, -$SO_2$- -CO-, an alkylene group having 1 to 20 carbon atoms or an alkylidene group having 6 to 20 carbon atoms; and $R^1$, $R^2$, $R^3$, $R^4$, $R^5$, $R^6$, $R^7$, and $R^8$ are the same or different, and each is a hydrogen atom, a halogen atom, or a monovalent hydrocarbon group having 1 to 5 carbon atoms.

A more preferable embodiment relates to the flame-retardant resin composition described above, which further includes a phosphorus flame retardant (D) other than the flame retardant (B).

Advantageous Effects of Invention

The thermoplastic resin composition of the present invention has a high flame-retardant, does not easily corrode metals of a processing machine even in molding at a high temperature exceeding 300°C, and has an excellent reflow heat resistance. For that reason, the flame-retardant resin composition of the present invention can be preferably used as a molding material for parts of a household electrical appliance, electric parts, electronic parts, and office automation parts, which are used in environments which require heat-resistance, and thus is industrially useful.

Brief Description of the Drawing

Fig. 1 is a graph showing a temperature profile in reflow heat resistance in Example of the present invention.

Description of Embodiments

[Thermoplastic resin (A)]

The thermoplastic resin (A) used in the present invention is not particularly limited so long as it is a thermoplastic resin having necessity for providing the flame retardance, and may include polyester resins such as polyethylene terephthalate resins, polybutylene terephthalate resins, and polyester liquid crystal resin; aliphatic polyamide resins such as nylon 6, nylon 66, and nylon 46; semi-aromatic polyamide resins such as modified nylon 6T, nylon 9T, nylon 4T, and nylon XD6; polycarbonate resins, modified polyphenylene oxide resins, polyacetal resins, polyolefin resins, polystyrene resins, ABS resins, and polyacrylic resins, in terms of necessity for providing the flame retardance.

Of these, one or more resins selected from the group consisting of polyester resins such as polyethylene terephthalate resins, polybutylene terephthalate resins, and polyester liquid crystal resins; aliphatic polyamide resins; polyamide resins such as semi-aromatic polyamide resins; polycarbonate resins, and modified polyphenylene oxide resins are preferable, and one or more resins selected from the group consisting of nylon 46 resins and semi-aromatic polyamide resins are more preferable, because the metal corrosion resistance at a processing temperature of 300°C or higher, and effects of reducing reduction of the reflow heat resistance and mechanical strength, which are the effects obtained from the flame retardant of the present invention, are necessary, and these effects can be sufficiently obtained from the resins described above.

The aliphatic polyamide resin refers to a substantially linear polyamide resin having no aromatic ring in its molecular chain, and the kinds and combinations of monomer compounds are not particularly limited. Specific examples of the particularly useful aliphatic polyamide resin may include nylon 46, nylon 66, copolymers of nylon 66 and nylon 6, copolymers of nylon 66 and nylon 610, copolymers of nylon 66 and nylon 612, copolymers of nylon 46 and nylon 66, and mixtures or copolymers thereof. Of these, nylon 46 is the particularly useful aliphatic polyamide resin.

Nylon 46 includes polytetramethylene adipamide obtained from tetramethylene diamine and adipic acid, copolymerized polyamides including polytetramethylene adipamide units as a main constituent component. It may include another polyamide as a mixed component within a range in which the properties of the polyamide 46 are not impaired. The component to be copolymerized is not particularly limited, and known amide-forming components may be used.

Typical examples of the component to be copolymerized may include amino acid compounds such as 6-aminocaproic acid, 11-aminoundecanoic acid, 12-aminoundecanoic acid, and para-aminomethyl benzoic acid; lactam compounds such as ε-caprolactam, and ω-lauryl lactam; diamine compounds such as hexamethylenediamine, undecamethylenediamine, dodecamethylenediamine, 2,2,4-trimethylhexamethylenediamine, 2,4,4-trimethylhexamethylenediamine, 5-methylnonamethylenediamine, meta-xylenediamine, para-xylenediamine, 1,3-bis(aminomethyl)cyclohexane, 1,4-bis(aminomethyl)cyclohexane, 1-amino-3-aminomethyl-3,5,5-trimethylcyclohexane, bis(3-methyl-4-aminocyclohexyl)methane, 2,2-bis(aminopropyl)piperazine, and aminoethylpiperazine; dicarboxylic acid compounds such as adipic acid, suberic acid, azelaic acid, sebacic acid, dodecanedioic acid, terephthalic acid, isophthalic acid, 2-chloroterephthalic acid, 2-methylterephthalic acid, 5-methylisophthalic acid, 5-sodium sulfoisophthalic acid, hexahydroterephthalic acid, hexahydroisophthalic acid, and diglycolic acid. The other polyamide, which is used as the mixed component, may include components including the component to be copolymerized described above.

The semi-aromatic polyamide resin refers to a polyamide resin having an aromatic ring in its molecular chain, in which generally the one of starting materials of a diamine compound, or a dicarboxylic acid compound,
has an aromatic ring, and the other is aliphatic. The kinds and combinations thereof are not particularly limited, and particularly useful semi-aromatic polyamide resins are polyamide resins having a high heat resistance with a melting point of 200°C or higher, and strong strength. Specific examples thereof may include polynonamethyleneterephthalamide (nylon 9T), polyhexamethylene adipamide/polyhexamethylene terephthalamide copolymer (nylon 66/6T), polyhexamethylene terephthalamide/polycaproamide copolymer (nylon 6T/6), polyhexamethylene adipamide/polyhexamethylene isophthalamide copolymer (nylon 66/6I), polydodecamide/polyhexamethylene terephthalamide copolymer (nylon 12/6T), polyhexamethylene adipamide/polyhexamethylene terephthalamide/polyhexamethylene isophthalamide copolymer (nylon 66/6T/6I), polyhexamethylene terephthalamide/polyhexamethylene isophthalamide copolymer (nylon 6T/6I), polyhexamethylene terephthalamide/poly(2-methylpentamethyleneterephthalamide) copolymer (nylon 6T/M5T), polyxylyleneadipamide (nylon XD6), polytetramethyleneterephthalamide (nylon 4T), and mixtures and copolymers thereof.

Further useful resins used as the semi-aromatic polyamide resin in the present invention may include nylon 9T, nylon XD6, nylon 6T/6I copolymers, nylon 6T/66 copolymers, nylon 66/6I/6 copolymer, and mixtures thereof.

When the flame retardant promoter ($C_x$) described below is used as the component (C), the various thermoplastic resins described above can be used as the thermoplastic resin (A), and in particular at least one thermoplastic resin selected from the group consisting of polyester resins, polyamide resins, polycarbonate resins, and modified polyphenylene oxide resins is preferably used. The flame-retardant resin composition of the present invention including the flame retardant promoter ($C_x$) as the component (C) has high flame retardance and does not easily corrode metals of a processing machine even in molding at a high temperature exceeding 300°C, and has an excellent reflow heat resistance. Furthermore, the flame-retardant resin composition has also excellent chemical resistance.

When the impact modifier ($C_y$) described below is used as the component (C), it is preferable to use the thermoplastic polyamide resin having a melting point of 240°C or higher as the thermoplastic resin (A). The thermoplastic polyamide resin having a melting point of 240°C or higher may include aliphatic polyamide resins such as nylon 66 and nylon 46; semi-aromatic polyamide resins such as nylon XD6, nylon 6T, modified nylon 6T, nylon 9T, nylon 4T, 6T/6I copolymers, nylon 6T/66 copolymers, and nylon 66/6I/6 copolymers.

Of these, it can be particularly preferable to use nylon 46, nylon 9T, nylon XD6, nylon 6T/6I copolymers, nylon 6T/66 copolymers, nylon 66/6I/6 copolymers, and mixtures thereof, because the heat resistance at a processing temperature of 300°C or higher, and effects of reducing reduction of the reflow heat resistance and mechanical strength, which are the effects obtained from the flame-retardant composition of the present invention, are necessary, and these effects can be sufficiently obtained from the resins described above.

The flame-retardant resin composition of the present invention including the thermoplastic polyamide resin having a melting point of 240°C or higher, the flame retardant (B), and the impact modifier ($C_y$) has the high flame retardance, such that a molded article thereof having a thickness of 1/16 inches has a flame retardance of V-0 based on the UL 94 standard, and does not easily corrode metals of a processing machine even in molding at a high temperature exceeding 300°C. In addition such a flame-retardant resin composition has high tensile strength and impact strength resistance.

When the layered compound ($C_z$) described below is used as the component (C), it is preferable to use thermoplastic polyamide resins having a melting point of 240°C or higher as the thermoplastic resin (A). The thermoplastic polyamide resin having a melting point of 240°C or higher may include aliphatic polyamide resins such as nylon 66 and nylon 46; semi-aromatic polyamide resins such as nylon XD6, nylon 6T, modified nylon 6T, nylon 9T, nylon 4T, nylon 6T/6I copolymers, nylon 6T/66 copolymers, and nylon 66/6I/6 copolymers

Of these, it can be preferable to use nylon 46, nylon 4T, nylon 9T, nylon XD6, nylon 6T/6I copolymers, nylon 6T/66 copolymers, nylon 66/6I/6 copolymers, and mixtures thereof, because the heat resistance at a processing temperature of 300°C or higher, and effects of reducing reduction of the reflow heat resistance and mechanical strength, which are the effects obtained from the flame-retardant composition of the present invention, are necessary, and these effects can be sufficiently obtained from the resins described above.

The flame-retardant resin composition of the present invention including the thermoplastic polyamide resin having a melting point of 240°C or higher, the flame retardant (B), and the layered compound (Cz) has high flame retardance, does not easily corrode metals of a processing machine even in molding at a high temperature exceeding 300°C, and has excellent mold processability, reflow heat resistance, and chemical resistance. In addition, such a flame-retardant resin composition has, surprisingly, excellent rigidity (mechanical characteristics), and the flame retardance can be further improved. Thus, when the layered compound ($C_z$) is used, not only the the mechanical property but also the flame-retarding property can be improved in the flame-retardant resin composition.

[Flame Retardant (B)]

The flame retardant (B) used in the present invention is a flame retardant for a thermoplastic resin, including a reaction product of at least one nitrogen-containing compound selected from the group of nitrogen-containing compounds represented by the following group (1) of the structure formulae and a phosphorus-containing compound represented by the following structure formula (2).

In such a flame retardant (B) used in the present invention, the content of phosphorus atoms is necessarily from 5.0 to 10.0% by weight of the total amount of the flame retardant (B), more preferably from 6.0 to 9.5% by weight, further more preferably from 7.0 to 9.0% by weight, in terms of the effect of providing the flame retardance. When the content of phosphorus atoms is within the range described above, excellent flame retardance can be provided to the thermoplastic resin (A), and the reflow heat resistance and the chemical resistance can be remarkably improved without reduction of the mold processability and mechanical characteristics of the thermoplastic resin (A). In addition, the corrosion of metals of a processing machine can be further remarkably suppressed even in molding at a high temperature exceeding 300°C. When the content of phosphorus atoms is less than 5.0% by weight, the exhibition of flame retardance becomes difficult. On the other hand, when the content of phosphorus atoms is more than 10.0% by weight, the mechanical characteristics of the resin composition of the present invention may be sometimes deteriorated.

For example, in a case where triallyl isocyanurate is used as the nitrogen-containing compound selected from the group (1) of the structure formulae, and 9,10-dihydro-9-oxa-10-phosphaphenanthrene-10-oxide (DOPO) is used as the phosphorus-containing compound represented by the structure formula (2), when they are reacted in a molar ratio of nitrogen-containing compound : phosphorus-containing compound of 1:1, the resulting product has, theoretically, a content of phosphorus atoms of 6.7% by weight; when they are reacted in a molar ratio of 1:2, the content is 9.1% by weight; and when they are reacted in a molar ratio of 1:2.5, the content is 9.8% by weight.

The flame retardant (B) used in the present invention is insoluble in toluene, whereby the chemical resistance can be further improved. It is preferably insoluble in tetrahydrofuran (THF), whereby the chemical resistance can be further improved. In the present invention, "insoluble in toluene" means that an insoluble part occupies 80% or more of the initial addition amount when a test is performed according to a test method (chemical resistance test) described below.

The flame retardant (B) used in the present invention has preferably a weight average molecular weight ($M_w$) of 2,000 to10,000, more preferably 3,000 to 7,000, in order to sufficiently exhibit the effects of the present invention described above, depending on the polymer structure. When the weight average molecular weight is less than 2,000, the reflow heat resistance of the resin composition of the present invention may sometimes be insufficient. When the weight average molecular weight is more than 10,000, the formability of the resin composition of the present invention may sometimes be deteriorated.

In the flame retardant (B) used in the present invention, the lower limit of the content of the cross-linked component, i.e., the cross-linked component insoluble in chloroform, in the flame retardant (B) is preferably 1% by weight or more of the total amount of the flame retardant (B), more preferably 10% by weight or more, further more preferably 15% by weight or more. The upper limit thereof is preferably 95% by weight or less of the total amount of the flame retardant (B), more preferably 79% by weight or less, further more preferably 69% by weight or less. When the content is within the range described above, the heat resistance and the reflow heat resistance of the resin composition are more improved compared with a case wherein the content of the cross-linked component does not satisfy the specific range. In addition, the flame retardant having such a cross-linked component has higher molecular weight than that of a flame retardant having no such a component, (there is cases in which the retardant is a giant molecule), and the

apparent hydrolysis resistance is improved due to the cross-linkage, and it can be considered that the retardant does not easily bleed out.

In the present invention, "cross-linked component" refers to a product having cross-linked structure in the reaction product, which is insoluble in chloroform. The content of the cross-linked component is obtained according to a measurement method described below.

The flame retardant (B) used in the present invention can be formed so as to have polymers having various structures according to preparation methods described below. The polymer is obtained by radical-polymerization of, for example, aryl groups of triallyl isocyanurate or its derivative. Specific examples thereof will be explained below.

When triallyl isocyanurate (17a) or triallyl cyanurate (17b) described below is used as a monomer of the nitrogen-containing compound, and 9,10-dihydro-9-oxa-10-phosphaphenanthrene-10-oxide (hereinafter referred to as "DOPO") is used as a monomer of the phosphorus-containing compound, it can be considered that at least one monomer equivalent selected from a group of monomer equivalents represented by the following group (8) of the structure formulae can be generated.

[C. 9]

Group (8) of the structure formulae

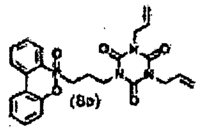
(8a)
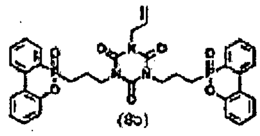
(8b)
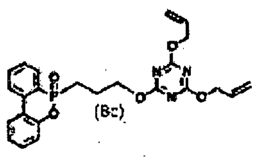
(8c)
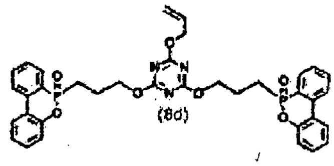
(8d)

In addition, it can be also considered that at least one monomer isomer selected from a group of monomer isomers represented by the following group (9) of the structure formulae can be generated, depending on the addition reaction mode of DOPO to triallyl isocyanurate or triallyl cyanurate.

[C. 10]

Group (9) of the structure formulae

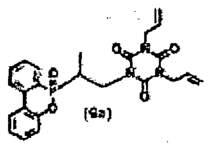
(9a)
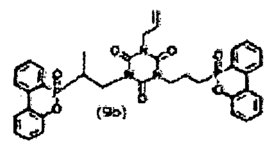
(9b)
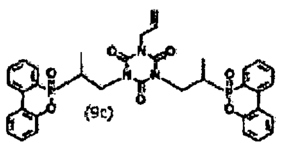
(9c)
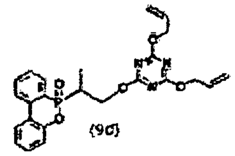
(9d)
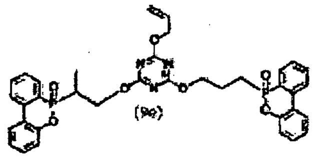
(9e)
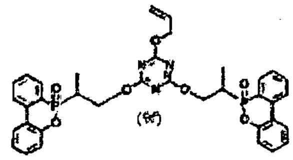
(9f)

In a first example of the flame retardant (B) used in the present invention, for example, the retardant is generated by polymerizing at least one of the monomers described above, their equivalents, and monomer isomers thereof, and may include flame retardant including a polymer at least one kind of the repeating units selected from the first to third groups of repeating units (which may be referred to as "units", hereinafter the same) represented by the groups (3) to

(5) of the structure formulae described above. The polymer structure is, for example, shown by the chemical formula (10) described below, wherein the units are randomly bonded to form a polymer (copolymer or random-copolymer).

[C. 11]

Chemical formula (10)

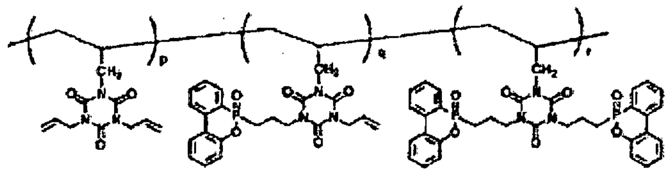

Although in the chemical formula (10) described above, the units are all described as a head-to-tail structure , a head-to-head structure, represented by the following group (11) of the structure formulae, may be possibly mixed therein, similar to usual polymerization reactions of an allyl compound.

[C. 12]

Group (11) of the structure formulae

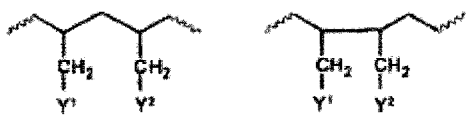

Example of head-to-tail

Example of head-to-head

In the group (11) of the structure formulae, $Y^1$ and $Y^2$ each any corresponding residue in the chemical formula (10).

The flame retardant having the polymer structure described above has a content of phosphorus atoms of 5.0 to 10.0% by weight, and a weight average molecular weight ($M_w$) of 2,000 to 10,000. Thus, in the polymer structure represented by the chemical formula (10), p, q, and r in the chemical formula (10) are shown as described below, if a transfer chain reaction, described below, is not considered. Thus, they can be roughly defined by the following formulae:

$$2000 \leq p \times M_p + q \times M_q + r \times M_r \leq 10000$$

$$(q+2r) \times (\text{atomic weight of phosphorus}) / (p \times M_p + q \times M_q + r \times M_r) \geq 0.05$$

wherein $M_p$, $M_q$, and $M_r$ are each a molecular weight of each unit.

For example, in the case of the polymer represented by the chemical formula (10), p, q, and r can be roughly defined using the following formulae:

$$p+1.87q+2.73r \geq 8.02$$

$$p+1.87q+2.73r \leq 40.11$$

$$(q+2r)/(p+q+r) \geq 0.62$$

In the case in which the polymer described above (flame retardant) is formed of only the units described above, p can be from 8 to 41, q can be from 4 to 22, and r can be from 2 to 15, in terms of the molecular weight of the polymer. However, with respect to a polymer including the units arbitrarily, there is a case in which the polymer does not include

any of the units, and in light of such a case, p can be from 0 to 41, q can be from 0 to 22, and r can be from 0 to 15. When the content of phosphorus atoms is considered, however, there is no case in which both q and r are 0 at the same time.

In terms of the content of phosphorus atoms, p, q, and r are defined so that Q+2R is 0.62 or more, more preferably 0.82 or more, further more preferably 1.12 or more, still further more preferably 1.46 or more, the most preferably 1.96 or more, when a molar ratio of P of the first repeating unit is (P=p/(p+q+r)), a molar ratio of Q of the second repeating unit is (Q=q/(p+q+r)), and a molar ratio of R of the third repeating unit is

$$(R=r/(p+q+r)).$$

When at least one nitrogen-containing compound selected from the group of the nitrogen-containing compounds represented by the group (1) of the structure formulae described above is reacted with the phosphorus-containing compound represented by the structure formula (2) in a manner described below, it can be considered that an unsaturated bond-containing group such as an aryl group is radical-polymerized, and thus the polymer ends may be sometimes formed the same as in a usual radical-polymerization. In a case of a radical-polymerization, it can be generally considered that a starting end group is a residue of a polymerization initiator (such as azobisisobutyronitrile [AIBN]), a residue of a chain-transfer agent (such as DOPO), or a residue of a product which has been chain-transferred (such as a solvent molecule which has been chain-transferred), and a terminated end group is disproportionated (hydrogen is pulled out from the radical end to form a double bond again), rebonded (terminated by bonding to another radical), or in a state where hydrogen is pulled out (hydrogen is pulled out from another polymer such as, chain-transfer agent [DOPO] or solvent molecule).

The chain-transfer agent will be particularly explained.

Sulfur chain-transfer agents are generally often used as the chain-transfer agent, because a thioradical is comparatively stable, and has an activity capable of reacting monomers again to perform the polymerization reaction. In the present invention, it can be considered that, the P-H bond in the phosphorus-containing compound (DOPO) represented by the structure formula (2) easily turns into a radical by pulling hydrogen out, and thus the compound has a chain-transferring property.

When the transfer chain reaction described above is considered, then p, q, and r in the chemical formula (10) are as described below; i.e., they are roughly defined by the following formulae wherein Mp, Mq, and $M_r$ are each a molecular weight of each unit, and $M_z$ is a molecular weight of a DOPO residue. The following formulae are relational expressions when the starting end group is a DOPO residue, and the terminated end group is H (which is supposed to be pulled out from DOPO).

$$2000 \leq p\times M_p+q\times M_q+r\times M_r+M_z \leq 10000$$

$$(q+2r+1)\times(\text{atomic weight of phosphorus})/(p\times M_p+q\times M_q+r\times M_r+M_z) \geq 0.05$$

For example, p, q, and r in a polymer represented by the chemical formula (10) are roughly defined by the following formulae when the both ends are considered.

$$p+1.87q+2.73r \geq 7.16$$

$$p+1.87q+2.73r \leq 39.25$$

$$(q+2r)/(p+q+r) \geq 0.42$$

In terms of the molecular weight of the polymer described above (flame retardant), in the case in which the polymer is formed of only the units described above, p can be roughly from 7 to 40, q can be roughly from 4 to 22, and r can be roughly from 3 to 15. However, there is a case in which the polymer does not include any of the units, and in light of such a case, p can be from 0 to 40, q can be from 0 to 22, and r can be from 0 to 15. When the content of phosphorus atoms is considered, however, there is no case in which both q and r are 0 at the same time.

In terms of the content of phosphorus atoms, p, q, and r are defined so that Q+2R is 0.42 or more, more

preferably 0.61 or more, further more preferably 0.86 or more, still further more preferably 1.18 or more, the most preferably 1.62 or more, as described above.

The chemical formula (10) used in the relational expression described above is the example using triallyl isocyanurate (17a) and DOPO, but the relational expression can be applied to a case using triallyl cyanurate (17b) and DOPO, and a case using both triallyl isocyanurate (17a) and triallyl cyanurate (17b).

In the present invention, with respect to p, q, and r, it can be considered that either of the relational expression in which the transfer chain reaction described above is not considered and the relational expression in which the transfer chain reaction is considered can hold.

The polymers, for example, represented by the structure formula (12) described below can be supposed as the more specific example of the polymer forming the flame retardant (B) in the present invention; that is, a polymer including repeating units of one kind selected from the third group of repeating units represented by the group (5) of the structure formulae (the chemical formula (10) in which p=q=0, and r=n).

[C. 13]

Structure formula (12)

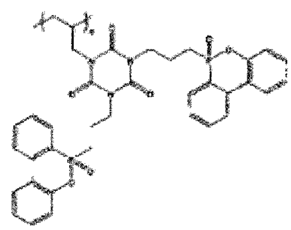

In addition to the structure formula (12), a case in which at least one isomer, which is selected from the group of isomers represented by the following group (13) of the structure formulae, is included can be supposed.

[C. 14]

Group (13) of the structure formulae

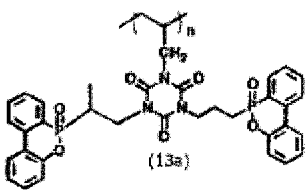

(13a)

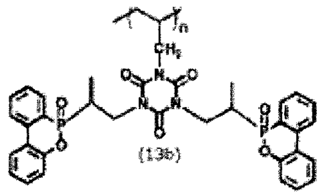

(13b)

The phosphorus and nitrogen-containing compounds, represented by the structure formula (12) or the group (13) of the structure formulae are obtained by linearly polymerized a reaction product in which two phosphorus-containing compounds, represented by the structure formula (2), are bonded to the nitrogen-containing compound (1a), selected from the group (1) of the structure formulae.

The flame retardant used in the present invention can be supposed to have, as such a phosphorus and nitrogen-containing compound, a structure in which 3 to 14 phosphorus and nitrogen-containing units wherein two phosphorus-containing compounds are added to the nitrogen-containing compound are linearly polymerized. In this case, such a phosphorus and nitrogen-containing compound has a content of phosphorus atoms of 9.1% by weight, and a content of nitrogen atoms of 6.2% by weight; that is, as the compound has a high phosphorus content and also includes nitrogen, it exhibits very high flame retardance. At the same time, the compound is dispersed in an island state in the resin matrix when it is added to the thermoplastic resin, and thus it can be considered that excellent mold processability can be exhibited, and the molded article therefrom has excellent bleeding out resistance and chemical resistance.

The second example is a compound including a polymer having at least one kind of repeating units selected from the first to third groups of repeating units represented by the groups (3) to (5) of the structure formulae described above, respectively, and including a cross-linked component having at least one kind of cross-linked structures selected from the group of the cross-linked structures represented by the groups (6) and (7) of the structure formulae respectively in a specific ratio. This example is, for example, a compound having a cross-linked structure formed by bonding double bonds in the aryl groups included in multiple polymers represented by the chemical formula (10) to each other.

In this example, the content of phosphorus atoms in the flame retardant including the polymer described above is from 5.0 to 10.0% by weight. Thus, when a total molar ratio of at least one kind of the first repeating units selected from the group of repeating units represented by the group (3) of the structure formulae, included in the polymer, and a component having at least one cross-linked structure selected from the group of cross-linked structures represented by the group (6) of the structure formulae is defined as P', a total molar ratio of at least one kind of the second repeating units selected from the group of repeating units represented by the group (4) of the structure formulae and a component having at least one cross-linked structure selected from the group of cross-linked structures represented by the group (7) of the structure formulae is defined as Q', and a molar ratio of at least one kind of the third repeating units selected from the group of repeating units represented by the group (5) of the structure formulae is defined as R', Q'+2R' is 0.62 or more, more preferably 0.82 or more, further more preferably 1.12 or more, still further more preferably 1.46 or more, the most preferably 1.96 or more, provided that P'+Q'+R'=1.

Examples having another cross-linked structure may include a compound including at least one kind of repeating units selected from the first to third groups of the repeating units, represented by the groups (3) to (5) of the structure formulae respectively, and including a cross-linked component having at least one cross-linked structure selected from the group of cross-linked structures represented by the group (14) of the structure formulae described below. This example is, for example, a compound in which multiple polymers represented by the chemical formula (10) are bonded to each other through triallyl isocyanurate as a cross-linking agent or another cross-linking agent.

[C. 15]

Group (14) of the structure formulae

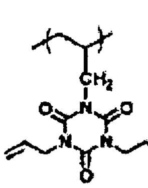

(14a)

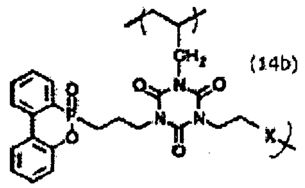

(14b)

In the group (14) of the structure formulae, X is a residue of triallyl isocyanurate or a residue of cross-linking agent.

A bifunctional monomer, which is generally used in a usual radical polymerization, may be used as the cross-linking agent. Examples thereof may include non-methacrylic polyfunctional vinyl monomers such as divinyl benzene, polyfunctional methacrylate monomers such as ethylene glycol dimethacrylate, diethylene glycol dimethacrylate, polyethylene glycol dimethacrylate, trimethylolpropane trimethacrylate, and allyl methacrylate.

These cross-linking agents may be used alone or as a mixture thereof.

The flame retardant (B) of this example can be obtained by a production method of the present invention including a cross-linking step described below. For example, when the molar ratio (T/H) of the charged triallyl isocyanurate and DOPO, to be reacted, is adjusted to 1/2 or more and the reaction is proceeded, or the unreacted aryl groups are reacted to each other or a cross-linking agent is introduced if the molar ratio is 1/2 or less, a phosphorus nitrogen-containing compound having a cross-linked structure can be obtained. In this case, the flame retardant having the cross-linked structure is more thermally stable than a non-cross-linked flame retardant, and not only the flame retardant has a heat resistance by itself, but also, a thermoplastic resin to which it is added has a thermal stability. For this reason, even if it is added to a resin such as nylon 46, nylon 9T or nylon 6T, used for a connector application responding to lead-free SMT, it is difficult to reduce the reflow heat resistance. In addition, the flame retardant having such a cross-linked component has a larger molecular weight than that of a flame retardant having no cross-linked component (there is cases in which the retardant is a giant molecule), and the apparent hydrolysis resistance is improved due to the cross-linkage, and it can be considered that the retardant does not easily bleed out.

Here, the reflow refers to a production method (step) in which after electronic parts are mounted on a cream solder, which has been coated on a base material, a temperature of a whole high temperature furnace is elevated to a melting point of the solder or higher to perform soldering. The reflow heat resistance refers to a property in which there is no occurrence of melting, deformation, or blisters of a molded article, and which can withstand the temperature, during the reflow step, in a case of a resin molded article.

If the flame retardant (B) used in the present invention sufficiently exhibits the effects of the present invention, it is not necessary that all of the main chain structures in the flame retardant have the structure formula (12), and the structures may, in part, include, for example, a structure of the groups (15) and (16) of the structure formulae described below, in which three molecules of the phosphorus-containing compound are added to one molecule of the nitrogen-containing compound.

[C. 16]

Group (15) of the structure formulae

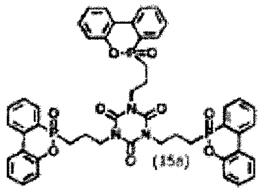
(15a)

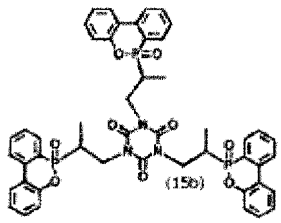
(15b)

[C. 17]

Group (16) of the structure formulae

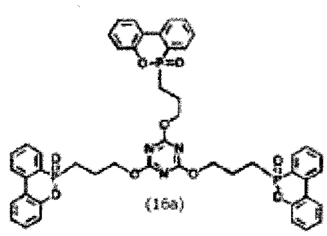
(16a)

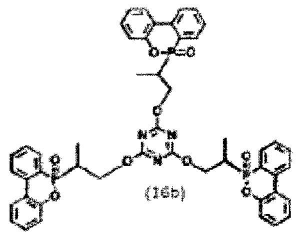
(16b)

The lower limit of the content of the flame retardant (B) used in the present invention is preferably 0.1 parts by weight based on 100 parts by weight of the thermoplastic resin, more preferably 1 part by weight, further more preferably 3 parts by weight. When the lower limit of the flame retardant (B) is less than 0.1 parts by weight, sufficient flame-retarding property may not possibly be obtained. The upper limit of the flame retardant (B) is preferably 75 parts by weight based on 100 parts by weight of the thermoplastic resin, more preferably 70 parts by weight, further more preferably 65 parts by weight. When the content of the flame retardant (B) is more than 75 parts by weight, there is concern that the properties, inherently existing in the thermoplastic resin, which is a matrix, maybe possibly impaired.

The nitrogen-containing compound used in the present invention is, as described above, represented by the group (1) of the structure formulae. The unsaturated bond-containing group in the group (1) of the structure formulae may include, methacryloyloxyethyl group, vinylphenyl group, vinylbenzyl group, vinyl group, and aryl group. The nitrogen-containing compound having the unsaturated bond-containing group may include tris(methacryloyloxyethyl)isocyanurate, tris(vinylphenyl)isocyanurate, tris(vinylbenzyl)isocyanurate, trivinylisocyanurate, triallyl isocyanurate, and triallyl cyanurate. One or more triallyl isocyanurate (17a) and the triallyl cyanurate (17b), represented by the group (17) of the structure formulae described below, are preferable, and triallyl isocyanurate (17a) is more preferable, because a high content of phosphorus atoms can be easily introduced into the reaction product and they can be easily obtained.

[C. 18]

Group (17) of the structure formulae

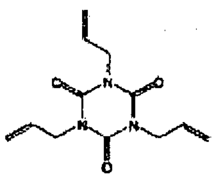
(17a)

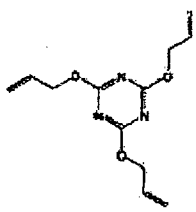
(17b)

The phosphorus-containing compound used in the present invention is, as described above, represented by the structure formula (2). Specific examples of such a compound may include 9,10-dihydro-9-oxa-10-phosphaphenanthrene-10-oxide (DOPO), 8-methyl-9,10-dihydro-9-oxa-10-phosphaphenanthrene-10-oxide, 2,6,8-tri-t-butyl-9,10-dihydro-9-oxa-10-phosphaphenanthrene-10-oxide, and 6,8-dicyclohexyl-9,10-dihydro-9-oxa-10-phosphaphenanthrene-10-oxide.

DOPO is preferable, because of a high phosphorus content and easy obtaining.

[Production Method of Flame Retardant (B)]

A first production method of the flame retardant (B) in the present invention includes a step in which a mixture including the nitrogen-containing compound : the phosphorus-containing compound in a molar ratio of 1:1.0 to 2.5 is elevated to a temperature of 180°C to 240°C at a rate of 1°C to 100°C/hour in a nitrogen atmosphere, and while the nitrogen-containing compound is polymerized, the phosphorus-containing compound is added to the nitrogen-containing compound and the polymerized nitrogen-containing compound.

In the step described above, a radical initiator (polymerization initiator) may be arbitrarily added to the reaction mixture, in order to promote the addition reaction and polymerization reaction to improve the productivity. The addition of the radical initiator may sometimes effectively serve for producing a flame retardant having a weight average molecular weight within a specific range. When, for example, the flame retardant having the polymer structure represented by the chemical formula (10) is obtained, however, it is desirable to use a small addition amount thereof, for suppressing the cross-linking reaction as much as possible.

A second production method of the flame retardant (B) in the present invention includes a step (1) in which a mixture including the nitrogen-containing compound the phosphorus-containing compound in a molar ratio of 1:1.0 to 2.5 is elevated to a temperature of 180°C to 240°C at a rate of 1°C to 100°C/hour in a nitrogen atmosphere, and while the nitrogen-containing compound is polymerized, the phosphorus-containing compound is added to the nitrogen-containing compound and the polymerized nitrogen-containing compound; and a cross-linking step (2) in which unsaturated bond-containing groups such as unreacted aryl groups in the reaction precursor obtained in the step (1) are reacted to each other, or the groups are reacted using a cross-linking agent. The step (1) and step (2) may be performed continuously.

In the step (2), specifically, the reaction of the unsaturated bond-containing groups such as aryl group with each other is promoted by prolonging the polymerization in the step (1); cross-linking is performed by the addition of a cross-linking agent; the reaction of the precursor obtained in the step (1) is performed using a horizontal reactor such as an extruder, or a batch resin kneader such as a kneader, Banbury mixer, two rolls, or plastomill, and further adding a radical initiator (polymerization initiator) or cross-linking agent.

In the second production method, when the radical initiator is added, the addition amount thereof is preferably from 0.01 to 5 parts by weight, based on the total amount of the nitrogen-containing compound and the phosphorus-containing compound or 100 parts by weight of the reaction precursor, more preferably from 0.05 to 1 part by weight. The radical initiator may arbitrarily selected from organic peroxides or other known initiators, considering the polymerization reaction time. Examples thereof may include dialkyl peroxides such as 1,3-di(t-butylperoxyisopropyl)benzene, and 2,3-dimethyl-2,3-diphenylbutane.

The second production method is particularly preferably applied to the production of the flame retardants having a cross-linked component in a specific percentage.

In any of the production methods described above, the preferable molar ratio described above is from 1:1.5 to 1:2, in order to reduce the amount of the unreacted phosphorus-containing compound, which causes gas generation during molding processing, i.e., extruding, or causes the bleeding out, and to improve the purity of the phosphorus nitrogen-containing compound in the flame retardant (B) in the present invention.

As the reaction for obtaining the phosphorus nitrogen-containing compound in the present invention includes the addition of the phosphorus-containing compound to the unsaturated bond in the nitrogen-containing compound, and the addition polymerization of the unsaturated bonds, in the nitrogen-containing compound, to each other. Therefore, it is necessary that two or more $R^1$, $R^2$, and $R^3$ in the group (1) of the structure formulae include the unsaturated bond-containing groups, and other includes an organic groups other than hydrogen atom and the unsaturated bond-containing group, as described above.

An advance of the reaction can be confirmed by regularly sampling a reaction sample during the reaction, and analyzing it using $^1$H-NMR. As described above, the addition reaction during the reaction is caused by adding the phosphorus in the phosphorus-containing compound to the unsaturated carbon bond C=C in the nitrogen-containing compound, and thus the disappearance of a signal (at 8.80 ppm and 7.08 ppm) of p-H proton in the phosphorus-containing compound is confirmed on $^1$H-NMR at this time. In addition, the addition polymerization reaction during the reaction is a polymerization reaction of the nitrogen compounds, i.e., the addition polymerization of aryl groups, similar to usual polymerization reactions of unsaturated bonds, and thus an integrated value of proton signals of the unsaturated bonds (at 5.23 ppm to 5.33 ppm, and 5.83 ppm to 5.93 ppm) is decreased, and at the same time appearance of a proton signal on a new C-C single bond is confirmed. In the above, the explanation is made taking a case in which the unsaturated bond-containing group is the aryl group, but the same confirmation can be performed depending on the kind.

[Flame Retardant Promoter ($C_x$)]

The flame retardant promoter used in the present invention may include preferably at least one compound selected from nitrogen-containing compounds, metal hydroxides, metal oxides, boron-containing compound, tin-containing compounds, and zinc compounds.

The nitrogen-containing compound used in the present invention may include aliphatic amine compounds, aromatic amine compounds, nitrogen-containing heterocyclic compounds, cyanide compounds, aliphatic amides, aromatic amide, urea, and thiourea. The aliphatic amine may include ethylamine, butylamine, diethylamine, ethylenediamine, butylenediamine, triethylenetetramine, 1,2-diaminocyclohexane, and 1,2-diaminocyclooctane. The aromatic amine may include aniline, and phenylenediamine. The nitrogen-containing heterocyclic compound may include uric acid, adenine, guanine, 2,6-diaminopurine, 2,4,6-triaminopyridine, and triazine compounds. The cyanide compound may include dicyandiamide . The aliphatic amide may include N,N-dimethylacetamide . The aromatic amide may include N,N-diphenylacetamide · The nitrogen-containing compounds may be used alone or as a mixture of two or more kinds.

The triazine compound listed above is a nitrogen-containing heterocyclic compound having a triazine backbone, and may include triazine, melamine, benzoguanamine, methylguanamine, cyanuric acid, melaminecyanurate, melamineisocyanurate, trimethyltriazine, triphenyltriazine, amelin, amelide, thiocyanuric acid, diaminomercaptotriazine, diaminomethyltriazine, diaminophenyltriazine, and diaminoisopropoxytriazine.

The melaminecyanurate or melamineisocyanurate is preferably an addition product of cyanuric acid or isocyanuric acid, and a triazine compound, and may include usually an addition product having composition with a molar ratio of 1:1 and sometimes an addition product having a composition with a molar ratio of 1:2. The addition product is produced by a known method, for example, a method in which water slurry is obtained from a mixture of the melamine and cyanuric acid or isocyanuric acid, the slurry is thoroughly mixed to form the two salts into fine particles, and then the resulting slurry is filtered and dried to generally obtain the product in the state of a powder. The salts described above is not necessary to be completely pure, and a small amount of unreacted melamine, cyanuric acid or isocyanuric acid may remain. The average particle size thereof before addition to the resin is preferably from 100 to 0.01 $\mu$m, more preferably from 80 to 1 $\mu$m, in terms of the flame retardance, mechanical strength, and surface property of the molded article.

The metal hydroxide used in the present invention may include aluminum hydroxide, magnesium hydroxide, zirconium hydroxide, calcium hydroxide, barium hydroxide, and zinc hydroxide. Of these, it is preferable to use aluminum hydroxide or magnesium hydroxide, because the effect of providing the flame retardance is high, and even if it is contained in the resin composition, the mechanical physical properties of the obtained molded article is not greatly influenced. The metal hydroxides may be used alone or as a mixture of two or more kinds.

The metal oxide used in the present invention may include zinc oxide, aluminum oxide, potassium oxide, calcium oxide, barium oxide, magnesium oxide, and titanium oxide. The average particle size is preferably 30 $\mu$m or less, preferably 10 $\mu$m or less, more preferably 1 $\mu$m or less. When the average particle size of the metal oxide is more than30 $\mu$m, the dispersibility to the resin component is deteriorated, and thus the high flame retardance may not be possibly obtained. The metal oxides may be used alone or as a mixture of two or more kinds.

The boron-containing compound used in the present invention may include zinc borate, barium metaborate, anhydrous zinc borate, and anhydrous boric acid. The tin compound may include zinc stannate, and zinc hydroxystannate. The zinc compound may include zinc sulphide The boron-containing compounds may be used alone or as a mixture of two or more kinds.

The lower limit of the content of the flame retardant promoter ($C_x$) used in the present invention is preferably 2 parts by weight, based on 100 parts by weight of the thermoplastic resin (A), and more preferably 5 parts by weight. When the lower limit of the flame retardant promoter ($C_x$) is less than 2 parts by weight, the sufficient effect of improving the flame retardance may not be possibly obtained. The upper limit of the content of the flame retardant promoter ($C_x$) is preferably 100 parts by weight, based on 100 parts by weight of the thermoplastic resin (A), more preferably 70 parts by weight, further more preferably 50 parts by weight. When the upper limit of the flame retardant promoter ($C_x$) is more than 100 parts by weight, the flowability is reduced, thin-wall formability may be impaired, or the surface property of the molded article may be reduced.

[Impact Modifier ($C_y$)]

The impact modifier ($C_y$) used in the present invention is desirably one or more modifiers selected from the group consisting of polyolefin impact modifiers, hydrogenated styrene thermoplastic elastomers, polyester elastomers, polyamide elastomers, butadiene impact modifiers, acrylic impact modifiers, and silicone impact modifiers.

Specific examples of the polyolefin impact modifier may include ethylene-propylene copolymers (EPR), ethylene-butene copolymers (EBR), ethylene-propylene-diene copolymers (EPDM), and metal salts of ethylene (meth)acrylic acid copolymer. They may be functional group-modified with methacrylic acid, or maleic anhydride. The polyolefin impact modifiers may be used alone or as a mixture of two or more kinds.

Specific examples of the hydrogenated styrene thermoplastic elastomer may include styrene-ethylene-butylene-styrene block copolymers (SEBS), styrene-ethylene-propylene-styrene block copolymers (SEPS), styrene-ethylene-butadiene-styrene block copolymers (SEEBS), and styrene-isobutylene-styrene block copolymers (SIBS) They may be functional group-modified with methacrylic acid, or maleic anhydride.

The hydrogenated styrene thermoplastic elastomers may be used alone or as a mixture of two or more kinds.

Specific examples of the polyester elastomer may include polyether ester.

Specific examples of the polyamide elastomer may include polyether ester amide, polyester amide, and polymerized fatty acid polyamide. The polyamide elastomers may be used alone or as a mixture of two or more kinds.

Specific examples of the butadiene impact modifier may include acrylonitrile-butadiene-styrene copolymers (ABS), methyl methacrylate-butadiene-styrene copolymers (MBS), styrene-butadiene rubber (SBR), and acrylonitrile-butadiene rubber (NBR). They may be functional group-modified with methacrylic acid, or maleic anhydride.

The butadiene impact modifiers may be used alone or as a mixture of two or more kinds.

Specific examples of the acrylic impact modifier may include polybutyl acrylate methyl methacrylate core-shell rubber, and silicone/acrylic composite rubber. They may be functional group-modified with methacrylic acid, or maleic anhydride. The acrylic impact modifiers may be used alone or as a mixture of two or more kinds.

Specific examples of the silicone impact modifier may include polydimethylsiloxane, polymethylphenylsiloxane, graft-copolymers obtained by graft-polymerization of such as methyl methacrylate, styrene, or acrylonitrile in the presence of a copolymer of dimethylsiloxane and diphenylsiloxane. The silicone impact modifiers may be used alone or as a mixture of two or more kinds.

The lower limit of the content of the impact modifier ($C_y$) in the present invention is preferably 0.1 parts by weight, based on 100 parts by weight of the thermoplastic resin (A), more preferably 0.5 parts by weight, further more preferably 1 part by weight. The lower limit of the content of the impact modifier ($C_y$) is less than 0.1 parts by weight, the impact strength or the tensile strength may not be sometimes improved. The upper limit of the content of the impact modifier ($C_y$) is preferably 70 parts by weight, based on 100 parts by weight of the thermoplastic resin (A), more preferably 65 parts by weight, further more preferably 60 parts by weight. When the upper limit of the content of the impact modifier ($C_y$) is more than 75 parts by weight, the heat resistance and the rigidity, which exist inherently in the thermoplastic resin (A) may be sometimes impaired.

[Layered Compound ($C_z$)]

The layered compound used in the present invention is one or more compounds selected from the group consisting of silicates, phosphates such as zirconium phosphate, titanates such as potassium titanate, tungstates such as sodium tungstate, uranates such as sodium uranate, vanadates such as potassium vanadate, molybdates such as magnesium molybdate, niobates such as potassium niobate, and graphite. Layered silicates are preferably used in terms of easiness of obtaining and handling.

The layered silicate described above is formed of a tetrahedral sheet of silicon oxide mainly and an octahedral sheet of metal hydroxide mainly, and may include for example, smectite clay, and swelling mica. The smectite clay is represented by the following general formula (18), which is natural or synthetic.

$$X^1_{0.2\text{-}0.6}Y^1_{2\text{-}3}Z^1_4O_{10}(OH)_2.nH_2O \qquad (18)$$

In the formula (18), $X^1$ is one or more elements selected from the group consisting of K, Na, 1/2Ca, and 1/2Mg; $Y^1$ is one or more element selected from the group consisting of Mg, Fe, Mn, Ni, Zn, Li, Al, and Cr; and $Z^1$ is one or more element selected from the group consisting of Si and Al. $H_2O$ shows a water molecule bonded to an intercalated ion, and n remarkably varies according to the intercalated ion and the relative humidity.

Specific examples of the smectite clay may include, for example, montmorillonite, beidellite, nontronite, saponite, iron saponite, hectorite, sauconite, stevensite, bentonite, and substituted products, derivatives, and mixtures thereof.

The swelling mica is represented by the following general formula (19):

$$X^2_{0.5\text{-}1.0}Y^2_{2\text{-}3}(Z^2_4O_{10})(F, OH)_2 \qquad (19)$$

in the formula (19), $X^2$ is one or more elements selected from the group consisting of Li, Na, K, Rb, Ca, Ba, and Sr; $Y^2$ is one or more elements selected from the group consisting of Mg, Fe, Ni, Mn, Al, and Li; and $Z^2$ is one or more elements selected from the group consisting of Si, Ge, Al, Fe, and B, which is natural or synthetic.

These are substances having a swelling property in water, a polar solvent compatible with water in any ratio, or a mixed solvent of water and the polar solvent, and may include, for example, lithium taeniolite, sodium taeniolite, lithium tetrasilicon mica, sodium tetrasilicon mica, and substituted products, derivatives, and mixtures thereof.

Some of the swelling micas described above have a structure similar to a structure of vermiculites, and such

equivalents of the vermiculites can be used. The vermiculite equivalents include 3 octahedron and 2 octahedron, which are represented by the following general formula (20):

$$(Mg, Fe, Al)_{2\text{-}3}(Si_{4\text{-}x}Al_x)O_{10}(OH)_2 \cdot (M^+,M^{2+}{}_{1/2})_x.\ nHzO \quad (20)$$

in the formula (20), M is an exchangeable cation of an alkali metal or alkaline earth metal such as Na or Mg; x=0.6 to 0.9, and n=3.5 to 5.

The layered silicate has desirably a crystalline structure in which crystals are stacked regularly in a c-axis direction and a high purity, but a so-called mixed layered mineral in which the crystalline cycle is disturbed and multiple kinds of crystal structures are mixed can be used.

The layered silicates may be used alone or as a mixture of two or more kinds. Of these, montmorillonite, bentonite, hectorite, and swelling mica having sodium ions between the layers are preferable, in terms of the dispersibility in the obtained polyamide resin composition and the effect of improving the physical properties of the polyamide resin composition.

In the present invention, in order to improve the dispersibility of the layered compound in the flame-retardant resin composition, the layered compound can be treated with a polyether compound having a cyclic hydrocarbon group.

The polyether compound having a cyclic hydrocarbon group used in the present invention is intended to be a substance having a cyclic hydrocarbon group in a side chain and/or a main chain of a polyoxyalkylene compound such as polyoxyethylene or polyoxyethyelen-polyoxypropylene copolymer. The cyclic hydrocarbon group means an aromatic hydrocarbon group and/or alicyclic hydrocarbon group, and may include, for example, phenyl group, naphthyl group, and cycloalkyl group. In the instant specification, it is intended that the "phenyl group" encompasses polyvalent cyclic hydrocarbon groups such as "phenylene group," unless otherwise indicated. Similarly, the naphthyl group and the cycloalkyl group encompass, respectively, naphthylene group and cycloalkylene groups.

The polyether compound described above may have a functional group other than the group having silicon, which is capable of forming the Si-O-Si bond, such as alkoxysilyl group and silanol group, and any functional group may be used so long as bad influences are not given to the thermoplastic polyester resin or the layered compound. Examples of the substituent may include saturated or unsaturated monovalent or polyvalent aliphatic hydrocarbon groups, groups bonded through an ester bond, an epoxy group, an amino group, a carboxyl group, groups having a carbonyl group at the end, an amido group, mercapto group, groups bonded through a sulfonyl bond, groups bonded through a sulfinyl bond, a nitro group, a nitroso group, a nitrile group, halogen atoms, and a hydroxyl group. The polyether compound may be substituted by one of these substituents or two or more substituents thereof.

Although the composition ratio of the substituent in the polyether compound is not particularly limited, it is desirable that the polyether compound is soluble in water or a polar solvent including water. Specifically, for example, the solubility in 100 g of water at room temperature is 1 g or more, preferably 2 g or more, more preferably 5 g or more, further more preferably 10 g, particularly preferably 20 g or more.

The polar solvent described above may include, for example, alcohols such as methanol, ethanol, and isopropanol; glycols such as ethylene glycol, propylene glycol, and 1,4-butanediol; ketons such as acetone and methyl ethyl ketone; ethers such as diethyl ether and tetrahydrofuran; amide compound such as N,N-dimethylformamide and N,N-dimethylacetoamide; other solvents including pyridine, dimethyl sulfoxide and N-methyl pyrrolidone. Diesters of carbonic acid such as dimethyl carbonate and diethyl carbonate may also be used. These polar solvents may be used alone or as a mixture of two or more kinds.

Of the cyclic hydrocarbon groups described above, the aromatic hydrocarbon is preferable in terms of the thermal stability and the dispersibility of the layered compound.

Of the polyether compound used in the present invention, compounds are preferably used, which have, in its main chain, units represented by the following structure formula (8):

[C. 19]

Structure formula (8)

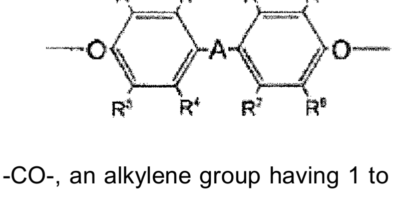

in the structure formula (8), -A- is -O-, -S-, -SO-, $-SO_2-$, -CO-, an alkylene group having 1 to 20 carbon atoms, or an

alkylidene group having 6 to 20 carbon atoms; $R^1$, $R^2$, $R^3$, $R^4$, $R^5$, $R^6$, $R^7$, and $R^8$ are the same or different and each a hydrogen atom, a halogen atom, or a monovalent hydrocarbon group having 1 to 5 carbon atoms, in terms of the thermal stability and the dispersibility of the layered compound.

Of the polyether compounds described above, compounds represented by the structure formula (21) are particularly preferably used, in terms of the thermal stability, the dispersibility of the layered compound and the easiness of obtaining.

[C. 20]

Structure formula (21)

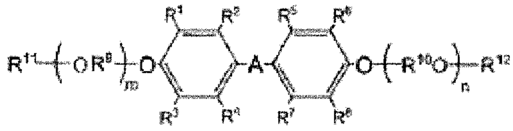

In the structure formula (21), -A- and$R^1$ to $R^8$ are as defined above; $R^9$ and $R^{10}$ are the same or different and each a bivalent hydrocarbon group having 1 to 5 carbon atoms; $R^{11}$ and $R^{12}$ are the same or different and each a hydrogen atom or a monovalent hydrocarbon group having 1 to 20 carbon atoms; and m and n show the number of repeating units of an oxyalkylene unit and satisfy $2 \leq m+n \leq 50$.

The amount of the polyether compound used can be adjusted so that the compatibility of the layered compound ($C_z$) and the thermoplastic resin (A) with the polyamide resin having, particularly, a melting point of 240°C or higher and the dispersibility of the layered compound ($C_z$) in the resin are sufficiently improved. If necessary, various polyether compounds having different functional groups may be together used. The amount of the polyether compound used, accordingly, are not generally limited with a number value, but the lower limit of the amount of the polyether compound added is 0.1 parts by weight, based on 100 parts by weight of the layered compound ($C_z$), preferably 0.2 parts by weight, more preferably 0.3 parts by weight, further more preferably 0.4 parts by weight, particularly preferably 0.5 parts by weight. The upper limit of the amount of the polyether compound added is 200 parts by weight, based on 100 parts by weight of the layered compound ($C_z$), preferably 180 parts by weight, more preferably 160 parts by weight, further more preferably 140 parts by weight, particularly preferably 120 parts by weight. When the lower limit of the amount of the polyether compound used is less than 0.1 parts by weight, the effect of fine-dispersing the layered compound ($C_z$) tends to be insufficient. On the other hand, even if the amount of the polyether compound used is more than 200 parts by weight, the obtained effects are not changed, and thus it is not necessary to use an amount more than 200 parts by weight.

In the present invention, the method for treating the layered compound ($C_z$) with the polyether compound is not particularly limited, and the treatment can be performed, for example, by a method shown below.

First, the layered compound and a dispersion medium are mixed and stirred. The dispersion medium includes water or a polar solvent including water. The specific examples thereof have been stated above, and the examples are omitted here.

A method for stirring the layered compound and the dispersion is not particularly limited, and for example it is performed by using a conventionally known wet-type stirrer.

The wet-type stirrer may include high-speed stirrers in which impellers are rotated at a high speed; wet-type mills in which a sample is wet-pulverized between a rotor to which a high shear speed is applied and a stirrer; mechanical wet-pulverizers utilizing a hard medium; wet impact pulverizers in which a sample is impacted at a high speed using jet nozzles; and wet ultrasonic pulverizers using ultrasonic waves. In order to more efficiently stir them, the number of revolution in the stirring is adjusted to 1000 rpm or more, preferably 1500 rpm or more, further more preferably 2000 rpm or more; or a shear velocity of 500 (1/s) or more, preferably 1000 (1/s) or more, further more preferably 1500 (1/s) or more is applied thereto. The upper limit of the number of revolution is about 25000 rpm, and the upper limit of the shear velocity is about 500000 (1/s). Even if the stirring is performed at a value exceeding the upper limit, or a shear velocity exceeding the upper limit is applied, the results do not tend to be changed, the stirring is not necessarily performed at the value exceeding the upper limit. The time necessary for mixing them is from 1 to 10 minutes or more. Then, the polyether compound is added thereto, and stirring is further continued to thoroughly mix them. After that, it is dried and, if necessary, is formed into a powder.

The lower limit of the amount of the layered compound ($C_z$) added is typically 0.1 parts by weight, based on 100 parts by weight of the thermoplastic resin (A), preferably 0.3 parts by weight, more preferably 0.5 parts by weight, further more preferably 1.0 parts by weight, particularly preferably 1.5 parts by weight. The upper limit of the amount of the layered compound ($C_z$) added is typically 150 parts by weight, based on 100 parts by weight of the thermoplastic resin (A), preferably 100 parts by weight, more preferably 70 parts by weight, further more preferably 50 parts by weight, particularly preferably 30 parts by weight. When the lower limit of the amount of the layered compound added is less

than 0.1 parts by weight, the mechanical properties and the effect of improving bending may be sometimes insufficient, and when the upper limit is more than 150 parts by weight, the fluidity may be sometimes impaired.

[Phosphorus Flame Retardant (D) Other Than (B)]

In the resin composition of the present invention, a phosphorus flame retardant (D) which is different from the flame retardant (B) may be used together with the flame retardant (B). The phosphorus flame retardant (D) in the present invention may include red phosphorus flame retardant, phosphate salt compounds such as ammonium (poly)phosphate and melamine (poly)phosphate, phosphoric acid esters (monomer type and condensed type), phosphazene compounds, and metal salts ofphosphinic acid.

The red phosphorus flame retardant may include, in addition of generally used red phosphorus, red phosphorus whose surface has been previously is subjected to a coating treatment with a film of a metal hydroxide selected from aluminum hydroxide, magnesium hydroxide, zinc hydroxide, and titanium hydroxide; red phosphorus whose surface is subjected to a double coating treatment, using first a film of a metal hydroxide selected from aluminum hydroxide, magnesium hydroxide, zinc hydroxide, and titanium hydroxide to produce a coating film, and then providing a film of a thermosetting resin on the film. The red phosphorus flame retardant may be used alone or as a mixture of two or more kinds.

The phosphoric acid salt compounds may include pyrophosphoric acid dimelamine, (poly)phosphoric acid ammonium, (poly)phosphoric acid melamine, (poly)phosphoric acid melem, (poly)phosphoric acid melam, (poly)phosphoric acid melon, and mixed polysalts thereof. The phosphoric acid salt compounds may be used alone or as a mixture of two or more kinds.

The phosphoric acid esters may include phosphates(phosphoric acid), phosphites (phosphorous acid), phosphonates (phosphonic acid), and phosphinates (phosphinic acid), and specific examples thereof may include triphenyl phosphate, resorcinolbis(diphenylphosphate), hydroquinonebis(diphenylphosphate), biphenylbis(diphenylphosphate), bisphenol A(diphenylphosphate), resorcinolbis(di-2,6-xylylphosphate), hydroquinonebis(di-2,6-xylylphosphate), biphenylbis(di-2,6-xylylphosphate), bisphenol A bis(di-2,6-xylylphosphate), pentaerythritol diphenylphosphate, pentaerythritol di-2,6-xylylphosphate, and 2,6,7-trioxa-1-phosphabicyclo[2,2,2]octane-4-methanol-1-oxide. The phosphoric acid esters may be used alone or as a mixture of two or more kinds.

The phosphazene compounds may include cyclic and/or chain phosphazene compounds such as phenoxyphosphazene, tolyloxy-phosphazene, xylyloxyphosphazene, phenoxytolyloxyphosphazene, and phenoxyxylyl phosphazene; cross-linked phosphazene compounds thereof (such as phenoxyphosphazene cross-linked with a bisphenol residue). The phosphazene compounds may be used alone or as a mixture of two or more kinds.

The metal salts of phosphinic acid may include metal salts of dialkyl phosphinate such as dimethyl phosphinate, methyl ethyl phosphinate, or diethyl phosphinate (the metal included in this metal salt is at least one metal selected from Mg, Ca, Al, Sb, Sn, Ge, Ti, Fe, Zr, Ce, Bi, Sr, Mn, Li, Na, and K); and metal salts of alkane bisphosphinic acid such as ethane-1,2-bis(phosphinic acid) (the metal included in this metal salt is as defined in the metal salt of dialkyl phosphinic acid). One or more salts selected from zinc salts, aluminum salts, titanium salts, zirconium salts, and iron salts are preferable in terms of easiness of obtaining, and the aluminum salts are more preferable in terms of the obtaining. The metal salts of phosphinic acid may be used alone or as a mixture of two or more kinds.

Of these, condensed phosphoric acid ester such as resorcinol bis(di-2,6-xylylphosphate), biphenyl bis(di-2,6-xylylphosphate) and metal salts of diethyl phosphinic acid are preferable in terms of the heat resistance and the handling.

The lower limit of the content of the phosphorus flame retardant (D) used in the present invention is preferably 0.1 parts by weight, based on 100 parts by weight of the thermoplastic resin (A), as the total content thereof with the flame retardant (B), more preferably1 part by weight, further more preferably 3 parts by weight. The lower limit of the total content is less than 0.1 parts by weight, the sufficient flame-retarding property may not be possibly obtained. The upper limit of the total content is preferably 75 parts by weight, based on 100 parts by weight of the thermoplastic resin (A), more preferably 70 parts by weight, further more preferably 65 parts by weight. When the total content is more than 75 parts by weight, the properties which exist inherently in the thermoplastic resin (A) may be possibly impaired.

[Inorganic Filler]

If necessary, to the flame-retardant resin composition of the present invention may added inorganic filler, in order to improve the strength, rigidity, and heat resistance. The inorganic filler is not particularly limited, so long as they are fibrous and/or granular inorganic filler. They may be added alone or as a mixture of two or more kinds.

Specific examples of the inorganic filler used in the present invention may include, for example, glass fibers, carbon fibers, aramid fibers, metal fibers, asbestos, potassium titanate whisker, wollastonite, glass flake, glass beads, talc, mica, clay (kaolin), calcium carbonate, barium sulfate, boron nitride, aluminum nitride, hydrotalcite, boehmite, aluminum hydroxide, magnesium hydroxide, zirconium hydroxide, calcium hydroxide, barium hydroxide, zinc hydroxide, zinc oxid, aluminum oxide, potassium oxide, calcium oxide, barium oxide, magnesium oxide, titanium oxide, zinc borate,

barium metaborate, anhydrous zinc borate, boric anhydride, zinc stannate, zinc hydroxystannate, and zinc sulphide. Of these, glass fibers, mica, talc, clay (kaolin), calcium carbonate, barium sulfate, hydrotalcite, boehmite, aluminum hydroxide, magnesium hydroxide, zirconium hydroxide, calcium hydroxide, barium hydroxide, aluminum oxide, potassium oxide, calcium oxide, barium oxide, magnesium oxide, zinc borate, barium metaborate, anhydrous zinc borate, boric anhydride, zinc stannate, zinc hydroxystannate, and zinc sulphide are preferable, and the glass fibers are particularly preferable.

Known glass fibers, which are generally used, can be used as the glass fiber used in the present invention, and it is preferable to use chopped strand glass fiber, which has been treated with a sizing agent, in terms of the workability.

The glass fiber used in the present invention is preferably treated the surface thereof with a coupling agent, in order to improve the adhesion of the resin with the glass fiber, or a binder may also be used. For example, alkoxysilane compounds such as γ-aminopropyltriethoxysilane and γ-glycidoxypropyltrimethoxysilane are preferably used as the coupling agent. Also, for example, epoxy resins or urethane resins are preferably used as the binder, but it is not limited thereto.

The lower limit of the content of the inorganic filler is preferably 5 parts by weight, based on 100 parts by weight of the thermoplastic resin (A), more preferably 10 parts by weight, further more preferably 15 parts by weight. When the lower limit of the content of the inorganic filler is less than 5 parts by weight, the effects of improving the heat resistance or rigidity may be sometimes insufficient. The upper limit of the content of the inorganic filler is preferably 120 parts by weight, based on 100 parts by weight of the thermoplastic resin (A), more preferably 100 parts by weight, further more preferably 80 parts by weight. When the upper limit of the content of the inorganic filler is more than 120 parts by weight, the fluidity may be reduced, the thin-wall formability may be impaired, or the surface property of the molded article may be reduced.

[Other Additives]

If necessary, to the resin composition of the present invention may added, for example, dropping inhibitors (polytetrafluoroethylene); anti-oxidants and heat-stabilizers (hindered phenol, hydroquinone, phosphite, thioether, copper compounds, and substituted products thereof); weather proof agents (resorcinol, salicylate, benzotriazole, benzophenone, hindered amine agents); releasing agents and lubricants (montanoic acid and metal salts, esters and half esters thereof, stearyl alcohol, stearamide, various bisamides, bisurea, polyethylene wax); pigments (cadmium sulfide, phthalocyanine, carbon black); dyes (nigrosine); crystal nucleating agents (organic crystal nucleating agents, talc, silica, kaolin, clay); plasticizers (octyl p-oxybenzoate, N-butyl benzenesulfonamide); anti-static agents (alkylsulfate anionic anti-static agents, non-ionic anti-static agents such as polyoxyethylene sorbitan monostearate, betaine amphoteric anti-static agents).

One embodiment of the flame-retardant resin composition of the present invention may include a flame-retardant resin composition including the thermoplastic resin (A), the flame retardant (B), the glass fiber ($C_w$), and the inorganic filler (E) other than the glass fiber ($C_w$). The flame-retardant resin composition of this embodiment is characterized by including the glass fiber ($C_w$) as the component (C) together with the flame retardant (B). The flame-retardant resin composition of this embodiment may include further the phosphorus flame retardant (D) other than the flame retardant (B).

The flame-retardant resin composition of this embodiment having the composition described above has the high flame retardance and the excellent reflow heat resistance. Also, the addition of the the glass fiber ($C_w$) and the inorganic filler other than the fiber improves the mechanical properties without reducing the flame-retarding property. The flame-retardant resin composition of this embodiment, accordingly, can be preferably used as forming materials for household electrical appliance, electric or electronic parts and office automation parts, and thus is industrially useful.

In the flame-retardant resin composition of this embodiment, any thermoplastic resin (A)described above can be used as the thermoplastic resin (A), and of these, thermoplastic polyamide resins having a melting point of 240°C or higher are preferable. Of such thermoplastic polyamide resins, at least one resin selected from the group consisting of nylon 46, nylon 4T, nylon 6T, modified nylon 6T, nylon 9T, nylon 10T, nylon 11T, and nylon XDR is preferable.

[Inorganic Filler (E) Other Than Glass Fiber ($C_w$)]

In the flame-retardant resin composition of this embodiment, the inorganic filler (E) other than the glass fiber ($C_w$) may include inorganic fillers listed above excluding the glass fiber ($C_w$). Specifically, inorganic fillers can be used as the inorganic filler (E) other than the glass fiber ($C_w$), for example, carbon fibers, aramid fibers, metal fibers, asbestos, potassium titanate whisker, wollastonite, glass flake, glass beads, talc, mica, clay (kaolin), calcium carbonate, barium sulfate, boron nitride, aluminum nitride, hydrotalcite, boehmite, aluminum hydroxide, magnesium hydroxide, zirconium hydroxide, calcium hydroxide, barium hydroxide, zinc hydroxide, zinc oxide, aluminum oxide, potassium oxide, calcium oxide, barium oxide, magnesium oxide, titanium oxide, zinc borate, barium metaborate, anhydrous zinc borate, boric anhydride, zinc stannate, zinc hydroxystannate, and zinc sulphide In the flame-retardant resin composition of this embodiment, the content of the inorganic filler (E) other than the glass fiber ($C_w$) is the same as the content of the inorganic filler in the flame-retardant resin composition including the inorganic filler shown above.

In the flame-retardant resin composition of this embodiment, the flame retardant (B), the glass fiber, and the phosphorus flame retardant (D) listed above can be used respectively as the flame retardant (B), the glass fiber ($C_w$), and the phosphorus flame retardant (D). The contents of the flame retardant (B) and the phosphorus flame retardant (D) are respectively the same contents of the flame retardant (B) and the phosphorus flame retardant (D) in the flame-retardant resin composition including the flame retardant (B) and the phosphorus flame retardant (D) shown above. The content of the glass fiber ($C_w$) is the same content of the inorganic filler in the flame-retardant resin composition including the inorganic filler shown above.

It is preferable to add the inorganic filler (E) other than the glass fiber ($C_w$) used in this embodiment during a cross-linking step of the flame retardant (B), whereby the dispersibility of the flame retardant (B) and the inorganic filler (E) in the resin composition is improved, and thus the flame retardance and the mechanical characteristics of the obtained resin composition are further improved. In the case in which the flame retardant (B) is added during the cross-linking step, the upper limit of the content of the inorganic filler (E) is preferably 120 parts by weight or less, based on 100 parts by weight of the flame retardant (B), more preferably 100 parts by weight or less, further preferably 80 parts by weight or less. The content of the inorganic compound (E) is more than 120 parts by weight, the cross-linking reaction may not be possibly advanced, and bad influence may be possibly given to the heat resistance of the flame retardant.

In the flame-retardant resin composition of this embodiment, two or more components selected from the group consisting of the flame retardant (B), the flame retardant (B) to which the inorganic filler (E) other than the glass fiber ($C_w$) is added during the cross-linking step, and the inorganic filler (E) other than the glass fiber ($C_w$) may be used together.

(Production Method)

The production method of the flame-retardant resin composition of the present invention is not particularly limited, and may be exemplified, by a method in which the thermoplastic resin, the flame retardant, and the flame retardant promoter are melt-kneaded using various generally used kneaders. Examples of the kneaders may include a single screw extruder, a twin screw extruder, a roll, a Banbury mixer, and a kneader. The thermoplastic resin, the flame retardant, and the flame retardant promoter may be added to the kneader at once and the mixture may be melt-kneaded, or the flame retardant and/or the flame retardant promoter are added to the thermoplastic resin, which has been previously molten, and the mixture may be melt-kneaded.

Examples

Next, the composition of the present invention will be specifically explained by means of specific Examples, but the present invention is not limited thereto. Resin and starting materials used in Examples and Comparative Examples will be shown below.

[Thermoplastic resin (A1)]

Nylon 9T (a trade name: Genestar N 1000 A manufactured by Kuraray Co., Ltd., a melting point: 304°C), which was a semi-aromatic polyamide resin, was used as the thermoplastic resin (A1) in the present invention.

[Thermoplastic resin (A2)]

Modified nylon 6T (a trade name: Amodel A-1006 C manufactured by Solvay Advanced Polymers K.K., a melting point: 310°C), which is a semi-aromatic polyamide resin, was used as the thermoplastic resin (A2) in the present invention.

[Flame Retardants (B1) to (B4)]

Flame retardants (B1) to (B4), which were synthesized in Production Examples 1 to 4 described below, were used as the flame retardant in the present invention.

[Flame Retardant Promoter (Cx1)]

Zinc borate monohydrate ($4ZnO \cdot B_2O_3 \cdot H_2O$) (a trade name: Fire Brake 415 manufactured by US Borax Inc.) was used as the flame retardant promoter (Cx1) in the present invention.

[Flame Retardant Promoter (Cx2)]

Anhydrous zinc borate ($2ZnO \cdot 3B_2O_3$) (a trade name: Fire Break 500 manufactured by US Borax Inc.) was used as the flame retardant promoter (Cx2) in the present invention.

[Flame Retardant Promoter (Cx3)]

Zinc Oxide $ZnO_2$ (manufactured by Mitsui Mining & Smelting Co., Ltd.) was used as the flame retardant promoter (Cx3) in the present invention.

[Flame Retardant Promoter (Cx4)]

Boric anhydride ($B_2O_3$) (manufactured by US Borax Inc.) was used as the flame retardant promoter (Cx4) in the present invention.

[Flame Retardant Promoter (Cx5)]

Zinc stannate ($ZnSnO_3$) (a trade name: ALCANEX ZS manufactured by Mizusawa Industrial Chemicals., Ltd.) was used as the flame retardant promoter (Cx5) in the present invention.

[Impact Modifier (Cy1)]

Maleic anhydride-modified EBR (a trade name: Tafmer MH 7010 manufactured by Mitsui Chemicals, Inc.) was used as the impact modifier (Cy1) in the present invention.

[Impact Modifier (Cy2)]

Maleic anhydride-modified EBR (a trade name: Tafmer MA8510 manufactured by Mitsui Chemicals, Inc.) was used as the impact modifier (Cy2) in the present invention.

[Impact Modifier (Cy3)]

A Zn salt of polyethylene-methacrylic acid copolymer (a trade name: Hi-Milan 1706 manufactured by Du Pont·Mitsui Polychemicals Co., Ltd) was used as the impact modifier (Cy3) in the present invention.

[Layered Compound (Cz1)]

A layered compound, prepared in Production Example 5, was used as the layered compound (Cz1) in the present invention.

[Phosphorus Flame Retardant (D1)]

A phosphorus-containing compound, synthesized in Production Example 6, was used as the phosphorus flame retardant (D1) other than the flame retardant (B).

[Phosphorus Flame Retardant (D2)]

An aromatic condensed phosphoric acid ester (a trade name: PX-200 manufactured by Daihachi Chemical Industry Co., Ltd.) was used as the phosphorus flame retardant (D2) other than the flame retardant (B).

[Inorganic Filler]

A glass fiber (Cw1) (a trade name: CS 3G-225S manufactured by Nitto Boseki Co., Ltd) was used as the inorganic filler in the present invention.

[Inorganic Filler (E1) to (E4) Other Than Glass Fiber]

Mica (a trade name: A-21S manufactured by Yamaguchi Mica Co., Ltd.) was used as the inorganic filler (E1)

other than glass fiber in the present invention.
Calcium carbonate (a trade name: Super #2000 manufactured by Maruo Calcium Co., Ltd.) was used as the inorganic compound (E2) other than glass fiber in the present invention.
Hydrotalcite (a trade name: DHT-4C manufactured by Kyowa Chemical Industry Co., Ltd.) was used as the inorganic compound (E3) other than glass fiber in the present invention.
Kaolin (a trade name: ASP-200 manufactured by Hayashi-hasei Co., Ltd.) was used as the inorganic compound (E4) other than glass fiber in the present invention.
The evaluation methods in Production Examples are as follows:

<Glass Transition Temperature (Tg)>

Tg of the obtained flame retardant was obtained according to differential scanning calorimetry (DSC). The DSC measurement was performed at a rate of temperature rise of 10°C /min under nitrogen stream using DSC-220C, manufactured by Seiko Instruments Inc.

<Phosphorus Content>

A phosphorus content of the obtained flame retardant was obtained according to radio-frequency plasma emission spectrochemical analysis (ICP-AES). A pre-treatment of ICP-AES was performed in accordance with US EPA METHOD 3052, a microwave resolution was performed using ETHOS manufactured by Milestone Srl., and ICP-AES was performed using ICPS-8100 manufactured by Shimadzu Corporation.

<Percentage of Cross-Linked Component>

The obtained flame retardant was pulverized, and a soluble component was extracted from the pulverized product using a Soxhlet extractor in a chloroform solvent for 6 hours. The extraction residue was dried at 100°C for 6 hours, and then the weight was measured. A percentage of the cross-linked component was obtained by the following calculation formula:

[percentage of cross-linked component (%)]=[weight of extraction residue]×100/[weight of flame retardant charged at initial time]

<Chemical Resistance>

In toluene (50 ml), or in a mixed solvent (50 ml) of toluene and tetrahydrofuran (THF) in a volume ratio of 1:1, 5 mg of the obtained flame retardant was dispersed, and the resulting dispersion was allowed to stand at an ordinary temperature for three days. After filtering off the insoluble part, the resulting product was dried, and evaluation was performed comparing the initial weight based on the following criteria.

○: An insoluble part was 80% by weight or more of the initial addition amount.
×: An insoluble part was less than 80% by weight of the initial addition amount.

<Weight Average Molecular Weight>

The weight average molecular weight of the obtained flame retardant was determined by solving 3 mg of the obtained flame retardant in 3 ml of chloroform, and subjecting the obtained solution to gel permeation chromatography (GPC) analysis. In the GPC analysis, a GPC system manufactured by Waters Inc., was used; polystyrene gel columns Shodex K-806 and Shodex K-805 (both are trade names, manufactured by Showa Denko K.K.) were used as columns: chloroform was used as an eluent; and analysis was performed in terms of polystyrene.
The evaluation methods in Examples are as follows:

<Flame Retardance>

Pellets obtained in each Example described below were dried at 120°C for 6 hours, and then they were injection-molded using an injection molding machine (JS 36 SS, a clamping pressure: 35 tons) at a cylinder temperature of 310°C to 320°C and a mold temperature of 140°C to obtain a 127 mm × 12.7 mm test specimen having a thickness of 1/16 inches. The combustibility of the obtained bar-shaped test specimen having a thickness of 1/16 inches was evaluated in accordance with UL 94 standard V test.

<Tensile Strength>

The pellets obtained in each Example described below were dried at 120°C for 6 hours, and then they were injection-molded using an injection molding machine (a clamping pressure: 75 tons) at a cylinder temperature of 310°C to 320°C and a mold temperature of 140°C to obtain a dumbbell-shaped test specimen in accordance with ASTM D-638. Using the obtained test specimen for measurement, the tensile strength was measured at 23°C in accordance with ASTM D-638.

<Bending Modulus>

The pellets obtained in each Example described below were dried at 120°C for 6 hours, and then they were injection-molded using an injection molding machine (a clamping pressure: 75 tons) at a cylinder temperature of 310°C to 320°C and a mold temperature of 140°C to produce a 12.7 × 127 × 6.4 mm bar-shaped test specimen. Using the obtained test specimen for measurement, the bending modulus was measured at 23°C in accordance with ASTM D-790.

<Reflow Heat Resistance>

The pellets obtained in each Example described below were dried at 120°C for 6 hours, and then they were injection-molded using an injection molding machine (JS 36 SS, a clamping pressure: 35 tons) at a cylinder temperature of 310°C to 320°C and a mold temperature of 140°C to obtain a 127 mm × 6.3 mm test specimen having a thickness of 1/32 inches. After the test specimen was dried at 125°C for 24 hours, humidity adjustment was performed at Level 2 in IPC/JEDEC J-STD-020D.1 (85°C × 60% RH × 168 hours), and then the test specimen was put on an aluminum substrate having a thickness of 0.8 mm, and at the same time a temperature sensor was set on the substrate. Then a profile was measured. A reflow test having a temperature profile shown in Fig. 1 in accordance with the JEDEC standard described above was performed, using an air/IR reflow apparatus (NRY-535MB-7Z manufactured by Yamato Works Corporation), and the evaluation was performed based on the following criteria:
○: Either of melting, deformation, or blister did not occur on both of the moisture absorption test specimen and the bone-dried test specimen.
Δ: Either of melting, deformation, or blister occurred only on the moisture absorption test specimen.
×: Either of melting, deformation, or blister occurred on both of the moisture absorption test specimen and the bone-dried test specimen.

(Production Example 1) [Polymerization Step]

A phosphorus-containing compound (9,10-dihydro-9-oxa-10-phosphaphenanthrene-10-oxide, a trade name: HCA manufactured by Sanko Co., Ltd.) and a nitrogen-containing compound (triallyl isocyanurate, a trade name: TAICROS manufactured by Evonik Industries) were added to a vertical polymerization vessel equipped with a condenser, a nitrogen-introducing tube, and a stirrer in an addition molar ratio of 1:2, and a radical initiator (2,3-dimethyl-2,3-diphenylbutane, a trade name: Nofuma BC manufactured by NOF Corporation) was added thereto in an amount of 0.1 parts by weight based on 100 parts by weight of the total amount of the phosphorus-containing compound and the nitrogen-containing compound. The temperature was gradually elevated to a temperature of 50°C to 200°C under nitrogen stream, and the mixture was stirred for about 12 hours. The obtained flame retardant (B1) had a phosphorus content of 8.5%, a Tg of 127°C, and was a colorless glassy solid at an ordinary temperature, and either sample was insoluble in toluene or THF. The flame retardant (B1) had a weight average molecular weight of 2700.

(Production Example 2) [Cross-linking Step]

100 parts by weight of the flame retardant (B1) obtained in Production Example 1, and 0.2 parts by weight of a radical initiator (1,3-di(t-butylperoxyisopropyl)benzene, a trade name: Perbutyl P manufactured by NOF Corporation) were dry-blended to obtain a mixture. The mixture was supplied into a vent-type 15 mmϕ same direction twin-screw extruder (KZW15TWIN-45MG manufactured by Technovel Corporation) through hopper holes and it was melt-kneaded at a cylinder temperature of 190 to 220°C. The obtained flame retardant (B2) was a colorless glassy solid (Tg: 138°C) at an ordinary temperature, and either sample was insoluble in toluene or THF. The phosphorus content was 8.9%, and the percentage of cross-linked component was 68%. The flame retardant (B2) was insoluble in chloroform, and its weight average molecular weight could not be measured.

(Production Example 3)

Melt-kneading was performed in the same manner as in Production Example 2 to obtain a flame retardant (B3), except that 95 parts by weight of the flame retardant (B1) obtained in the polymerization step of Production Example 1, 5 parts by weight of an inorganic compound (E1) other than the glass fiber, and 0.2 parts by weight of a radical initiator (1,3-di(t-butylperoxylsopropyl)benzene, a trade name: Perbutyl manufactured by NOF Corporation) were used in the cross-linking step in Production Example 2. The obtained flame retardant (B3) was white glassy solid (Tg: 139°C) at an ordinary temperature, and was insoluble in toluene or THF. The phosphorus content was 8.7%, and the percent of the cross-linked component was 60%.

(Production Example 4)

Melt-kneading was performed in the same manner as in Production Example 3 to obtain a flame retardant (B4), except that the inorganic compound (E1) other than the glass fiber in Production Example 3 was changed to the inorganic compound (E2) other than the glass fiber. The obtained flame retardant (B4) was a white glassy solid (Tg: 138°C) at an ordinary temperature, and was insoluble in toluene or THF. The phosphorus content was 8.6%, and the cross-linked component was 64%.

(Production Example 5)

100 parts by weight of deionized water and 8 parts by weight of a layered compound (swelling mica, a trade name: Somasif ME100 manufactured by Co-op Chemical Co., Ltd.) were mixed. Then, 1.2 parts by weight of a polyether compound (polyethylene glycol having bisphenol A units in its main chain, a trade name: Bisol 18EN, manufactured by Toho Chemical Industry Co., Ltd.) was added thereto, and the mixture was mixed for 15 to 30 minutes. After that, the resulting mixture was dried and formed into a powder to obtain a layered compound (Cz1).

(Production Example 6)

A phosphorus-containing compound (9,10-dihydro-9-oxa-10-phosphaphenanthrene-10-oxide, a trade name: HCA manufactured by Sanko Co., Ltd.), 60 parts by weight of itaconic acid having an equal mole to the phosphorus-containing compound, and 160 parts by weight of ethylene glycol having a double moles or more to the itaconic acid were added to a vertical polymerization vessel equipped with a distilling tube, a rectifying tube, a nitrogen-introducing tube, and a stirrer, and the temperature was gradually elevated by heating them to a temperature of 120 to 200°C under nitrogen stream, and the mixture was stirred for about 10 hours.

After that, antimony trioxide and 0.1 parts by weight of zinc acetate were added thereto, and the condensation polymerization reaction was performed in a vacuum of 1 Torr or less keeping the temperature at 220°C, while ethylene glycol was distilled away from the mixture. After about 5 hours, the outflow of ethylene glycol was remarkably decreased, which was considered that the reaction was completed.

The obtained phosphorus-containing compound (D1) was a pale-yellow glassy solid (Tg: 81°C) at an ordinary temperature, and was insoluble in toluene. The phosphorus content was 7.2%.

(Examples 1 to 7)

A mixture was obtained by dry-blending starting materials shown in Table 1 in an addition composition (unit: parts by weight) shown in Table1. The mixture was supplied to a vent-type 44 mmϕ the same direction twin-screw extruder (TEX 44 manufactured by The Japan Steel Works, Ltd.) through hopper holes, and melt-kneading was performed at a cylinder temperature of 290 to 320°C to form pellets. The obtained pellets were injection-molded in the same conditions as described above to obtain a test specimen, which was evaluated by the methods described above. The evaluation results in Examples 1 to 7 are shown in Table 1.

[Table 1]

| | | Example | | | | | | |
|---|---|---|---|---|---|---|---|---|
| | | 1 | 2 | 3 | 4 | 5 | 6 | 7 |
| Addition composition (part) | Thermoplastic resin (A1) | 100 | 100 | 100 | 100 | - | - | - |
| | Thermoplastic resin (A2) | - | - | - | - | 100 | 100 | 100 |
| | Flame retardant (B2) | 30 | 30 | 30 | 30 | 33 | 33 | 33 |
| | Flame retardant promoter (Cx1) | 10 | - | - | - | - | - | - |
| | Flame retardant promoter (Cx2) | - | 10 | - | - | 22 | - | - |
| | Flame retardant promoter (Cx3) | - | - | 10 | - | - | - | - |
| | Flame retardant promoter (Cx4) | - | - | - | 10 | - | - | - |
| | Flame retardant promoter (Cx5) | - | - | - | - | - | 22 | 22 |
| | Phosphorus flame retardant (D2) | - | - | - | - | - | - | 5 |
| | Glass fiber (Cw1) | 60 | 60 | 60 | 60 | 67 | 67 | 67 |
| Property | Flame retardance 1/16 inch thick | V-1 | V-1 | V-1 | V-1 | V-0 | V-0 | V-0 |
| | Tensile strength (MPa) | 145 | 146 | 126 | 91 | 175 | 170 | 160 |
| | Reflow heat resistance | ○□ | ○□ | ○□ | ○□ | ○□ | ○□ | ○□ |

(Comparative Examples 1 to 8)

Pellets were produced and injection-molding was performed in an addition component (unit: parts by weight) shown in Table 4 in the same manner as in Examples 1 to 7 to obtain test specimens, and experimentations were performed in the same manner as above. The evaluation results in Comparative Examples 1 to 8 are shown in Table 2. In Table 2, "poor biting" described on the margin means that the the mixture has a low viscosity and thus the mixture is poorly caught by screws in the molding machine.

[Table 2]

| | | Comparative Example | | | | | | | |
|---|---|---|---|---|---|---|---|---|---|
| | | 1 | 2 | 3 | 4 | 5 | 6 | 7 | 8 |
| Addition composition (part) | Thermoplastic resin (A1) | 100 | 100 | 100 | 100 | - | - | - | - |
| | Thermoplastic resin (A2) | - | - | - | - | 100 | 100 | 100 | 100 |
| | Flame retardant (B2) | - | 40 | - | - | - | 40 | - | - |
| | Phosphorus flame retardant (D1) | - | - | 56 | - | - | - | 40 | - |
| | Phosphorus flame retardant (D2) | - | - | - | 56 | - | - | - | 40 |
| | Glass fiber (Cw1) | 13 | 60 | 67 | 67 | 43 | 60 | 60 | 60 |
| Property | Flame retardance 1/16 inch thick | Not V | V-1 | * | * | Not V | V-0 | * | * |
| | Tensile strength (MPa) | 197 | 107 | * | * | 185 | 168 | * | * |
| | Reflow heat resistance | [illegible] | [illegible] | * | * | [illegible] | [illegible] | * | * |
| *The evaluation could not be performed because the extrusion could not be performed because of poor biting. | | | | | | | | | |

(Examples 8 to 13)

Each mixture was obtained by dry-blinding starting materials shown in Table 3 in an addition composition (unit: parts by weight) shown in Table 3. The mixture was supplied to a vent-type 44 mmϕ the same direction twin-screw extruder (TEX 44 manufactured by The Japan Steel Works, Ltd.) through hopper holes, and melt-kneading was performed at a cylinder temperature of 250 to 310°C to form pellets. The obtained pellets were injection-molded in the same

conditions as described above to obtain a test specimen, which was evaluated by the methods described above. The evaluation results in Examples 8 to 13 are shown in Table 3.

[Table 3]

| | | Example | | | | | |
|---|---|---|---|---|---|---|---|
| | | 8 | 9 | 10 | 11 | 12 | 13 |
| Addition composition (part) | Thermoplastic resin (A2) | 45 | 47 | 49 | 45 | 45 | 42 |
| | Flame retardant (B2) | 20 | 20 | 20 | 20 | 20 | 20 |
| | Impact modifier (Cy1) | 5 | 3 | 1 | - | - | 5 |
| | Impact modifier (Cy2) | - | - | - | 5 | - | - |
| | Impact modifier (Cy3) | - | - | - | - | 5 | - |
| | Phosphorus flame retardants (D2) | - | - | - | - | - | 3 |
| | Glass fiber (Cw1) | 30 | 30 | 30 | 30 | 30 | 30 |
| Property | Flame retardance 0.8 mm thick | V-0 | V-0 | V-0 | V-0 | V-0 | V-0 |
| | Tensile strength (MPa) | 183 | 189 | 195 | 185 | 183 | 175 |
| | IZOD J/m) | 85 | 72 | 71 | 80 | 75 | 80 |
| | Reflow heat resistance | ○ | ○ | ○ | ○ | ○ | ○ |

(Comparative Examples 9 to 11)

Pellets were produced and injection-molding was performed in an addition component (unit: parts by weight)shown in Table 4 in the same manner as in Examples 8 to 13 to obtain test specimens, and experimentations were performed in the same manner as above. The evaluation results in Comparative Examples 9 to 11 are shown in Table 4.

[Table 4]

| | | Comparative Example | | |
|---|---|---|---|---|
| | | 9 | 10 | 11 |
| Addition composition (part) | Thermoplastic resin (A2) | 75 | 65 | 50 |
| | Flame retardant (B2) | - | - | 20 |
| | Impact modifier (Cy1) | - | 5 | - |
| | Impact modifier (Cy2) | - | - | - |
| | Impact modifier (Cy3) | - | - | - |
| | Phosphorus flame retardant (D2) | - | - | - |
| | Glass fiber (Cw1) | 30 | 30 | 30 |
| Property | Flame retardance 0.8 mm thick | Not V | Not V | V-0 |
| | Tensile strength (MPa) | 192 | 198 | 171 |
| | IZOD (J/m) | 81 | 95 | 70 |
| | Reflow heat resistance | ○ | ○ | ○ |

It can be understood from Examples 8 to 13 and Comparative Examples 9 to11 that the resin composition of the present invention has the excellent tensile strength and impact resistance while the reflow heat resistance and the flame retardance are maintained.

(Examples 14 to 16)

Each mixture was obtained by dry-blinding starting materials shown in Table 5 in an addition composition (unit: parts by weight) shown in Table 5. The mixture was supplied to a vent-type 44 mmϕ the same direction twin-screw extruder (TEX 44 manufactured by The Japan Steel Works, Ltd.) through hopper holes, and melt-kneading was performed at a cylinder temperature of 290 to 320°C to form pellets. The obtained pellets were injection-molded in the same conditions as described above to obtain a test specimen, which was evaluated by the methods described above. The evaluation results in Examples 14 to 16 are shown in Table 5.

[Table 5]

| | | Example | | |
|---|---|---|---|---|
| | | 14 | 15 | 16 |
| Addition composition (part) | Thermoplastic resin (A1) | 100 | - | - |
| | Thermoplastic resin (A2) | - | 100 | 100 |
| | Flame retardant (B2) | 44 | 44 | 33 |
| | Layered compound (Cz1) | 11 | 11 | 11 |
| | Phosphorus flame retardant (D1) | - | - | 5 |
| | Glass fiber (Cw1) | 67 | 67 | 67 |
| Property | Flame retardance 1/16 inch thick | V-1 | V-0 | V-0 |
| | Bending modulus (MPa) | 10000 | 11000 | 10700 |
| | Reflow heat resistance | ○ | ○ | ○ |

(Comparative Examples 12 to 19)

Pellets were produced and injection-molding was performed in an addition component (unit: parts by weight) shown in Table 6 in the same manner as in Examples 14 to 16 to obtain test specimens, and experimentations were performed in the same manner as above. The evaluation results in Comparative Examples 12 to 19 are shown in Table 6. In Table 6, "poor biting" described on the margin means that the the mixture has a low viscosity and thus the mixture is poorly caught by screws in the molding machine.

[Table 6]

| | | Comparative Example | | | | | | | |
|---|---|---|---|---|---|---|---|---|---|
| | | 12 | 13 | 14 | 15 | 16 | 17 | 18 | 19 |
| Addition composition (part) | Thermoplastic resin (A1) | 100 | 100 | 100 | 100 | - | - | - | - |
| | Thermoplastic resin (A2) | - | - | - | - | 100 | 100 | 100 | 100 |
| | Flame rolarclant (B2) | - | 40 | - | - | - | - | - | - |
| | Phosphorus flame retardant (D1) | - | - | 56 | - | - | - | 40 | - |
| | Phosphorous flame retardant (D2) | - | - | - | 56 | - | - | - | 40 |
| | Glass fiber(Cw1) | 43 | 60 | 67 | 67 | 43 | 60 | 60 | 60 |
| Property | Flame retardance 1/16 inch thick | Not V | V-1 | * | * | Not V | V-0 | * | * |
| | Bending modulus (MPa) | 8000 | 8800 | * | * | 9900 | 9800 | * | * |
| | Reflow heat resistance | ○ | ○ | * | * | ○ | ○ | * | * |
| *The evaluation could not be performed because the extrusion could not be performed because of poor biting | | | | | | | | | |

(Reference Examples 1 to 6)

Each mixture was obtained by dry-blinding starting materials shown in Table 7 in an addition composition (unit: parts by weight) shown in Table 7. The mixture was supplied to a vent-type 44 mmϕ the same direction twin-screw extruder (TEX 44 manufactured by The Japan Steel Works, Ltd.) through hopper holes, and melt-kneading was performed at a cylinder temperature of 290 to 340°C to form pellets. The obtained pellets were injection-molded in the same conditions as described above to obtain a test specimen, which was evaluated by the methods described above. The evaluation results in Reference Examples 1 to 7 are shown in Table 7 and Table 8.

(Comparative Reference Example 1)

Pellets were produced and injection-molding was performed in an addition component (unit: parts by weight) shown in Table 7 in the same manner as in Reference Examples 1 to 6 to obtain test specimen, and evaluations were performed in the same manner as above. The evaluation results in Comparative Reference Examples 1 are shown in Table 7 and Table 8.

[Table 7]

| | | Reference Example | | | | | Comparative Reference Example |
|---|---|---|---|---|---|---|---|
| | | 1 | 2 | 3 | 4 | 5 | 1 |
| Addition composition (part) | Thermoplastic resin (A2) | 100 | 100 | 100 | 100 | 100 | 100 |
| | Flame retardant (B2) | 38 | 38 | 38 | 38 | 38 | 40 |
| | Glass fiber (Cw) | 60 | 60 | 60 | 60 | 60 | 60 |
| | Inorganic filler (E1) | 2 | | | | | |
| | Inorganic filler (E2) | | 2 | | | | |
| | Inorganic filler (E3) | | | 2 | 2 | | |
| | Inorganic filler (E4) | | | | | 2 | |
| | Phosphorus flame retardant(D2) | | | | 3 | | |
| Property | Flame retardance 1.6 mm thick | V-0 | V-0 | V-1 | V-0 | V-0 | V-0 |
| | Tensile strength (MPa) | 138 | 138 | 129 | 124 | 148 | 118 |
| | IZOD (J/M) | 62 | 60 | 69 | 64 | 61 | 60 |
| | Reflow heat resistance | б | б | б | б | б | б |

[Table 8]

| | | Reference Example | | Comparative Reference Example |
|---|---|---|---|---|
| | | 6 | 7 | 1 |
| Addition composition (p art) | Thermoplastic resin (A2) | 100 | 100 | 100 |
| | Flame retardant (B2) | | | 40 |
| | Flame retardant (B3) | 40 | | |
| | Flame retardant (B4) | | 40 | |
| | Glass fiber (Cw) | 60 | 60 | 60 |

(continued)

| | | Reference Example | | Comparative Reference Example |
|---|---|---|---|---|
| | | 6 | 7 | 1 |
| Property | Flame retardance 1.6 mm thick | V-0 | V-0 | V-0 |
| | Tensile strength (MPa) | 144 | 139 | 118 |
| | IZOD (J/M) | 66 | 65 | 60 |
| | Reflow heat resistance | б | б | б |

Industrial Applicability

The flame-retardant resin composition of the present invention can be used as materials for various molded articles. The composition can be preferably used, particularly, as forming materials for household electrical appliance, electric or electronic parts, and office automation parts, and thus is industrially useful.

## Claims

**1.** A flame-retardant resin composition comprising

(A) a thermoplastic resin;
(B) a flame retardant including a reaction product of at least one nitrogen-containing compound selected from the group of nitrogen-containing compounds represented by the following group (1) of the structure formulae and a phosphorus-containing compound represented by the following structure formula (2), which is insoluble in toluene and has a content of phosphorus atoms of 5.0 to 10.0% by weight,

wherein the flame retardant (B) is produced by a method which includes a step in which a mixture including the nitrogen-containing compound : the phosphorus-containing compound in a molar ratio of 1:1.0 to 2.5 is elevated to a temperature of 180°C to 240°C at a rate of 1°C to 100°C/hour in a nitrogen atmosphere, and
wherein the flame retardant (B) includes a polymer having at least one kind of repeating units selected from first to third groups of repeating units represented by the following groups (3) to (5) of the structure formulae respectively; and

(C) at least one component selected from the group consisting of a flame retardant promoter ($C_x$), an impact modifier ($C_y$), and a layered compound ($C_z$);

[C. 1]

Group (1) of the structure formulae

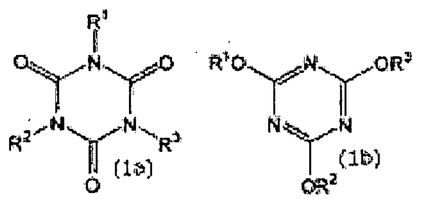

wherein two or more of $R^1$, $R^2$, and $R^3$ are an unsaturated bond-containing group and the others are a hydrogen atom or an organic group other than the unsaturated bond-containing group;

[C. 2]

Structure formula (2)

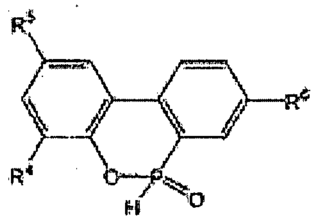

wherein $R^4$, $R^5$, and $R^6$ are the same or different, and each is a hydrogen atom, an alkyl group, a cycloalkyl group, an aryl group, or an aralkyl group;

[C. 3]

Group (3) of the structure formulae

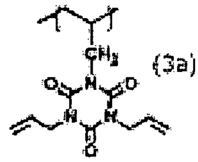

(3a)

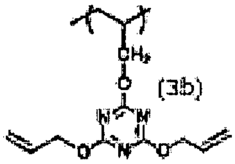

(3b)

;

[C. 4]

Group (4) of the structure formulae

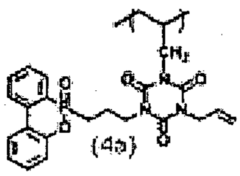

(4a)

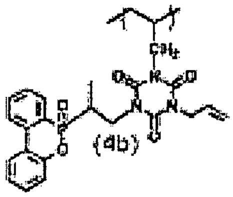

(4b)

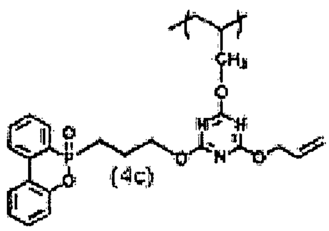

(4c)

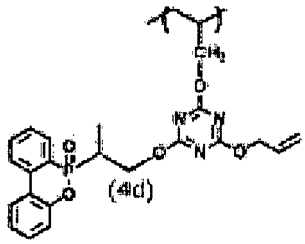

(4d)

;

[C. 5]

Group (5) of the structure formulae

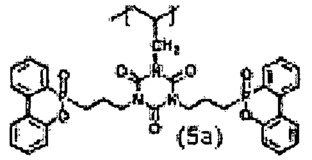
(5a)

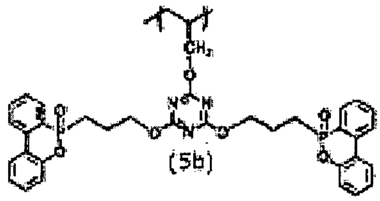
(5b)

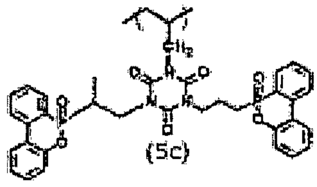
(5c)

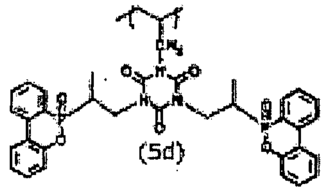
(5d)

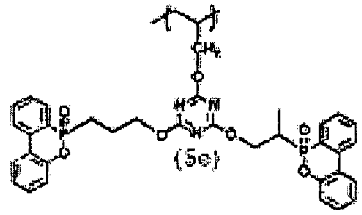
(5e)

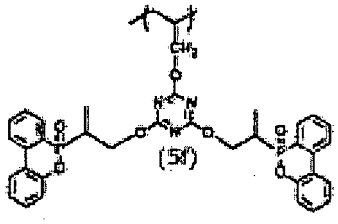
(5f)

.

2. The flame-retardant resin composition according to claim 1, wherein the flame retardant (B) has a weight average molecular weight ($M_w$) of 2,000 to 10,000.

3. The flame-retardant resin composition according to claim 1 or 2, wherein the flame retardant (B) includes a cross-linked component, the cross-linked component being contained in a proportion of 1% by weight or more of the total amount of the flame retardant (B).

4. The flame-retardant resin composition according to claim 3, wherein the cross-linked component is a component which is insoluble in chloroform.

5. The flame-retardant resin composition according to claim 1, wherein the flame retardant (B) includes a polymer having at least one kind of repeating units selected from the first to third groups of repeating units represented by the following groups (3) to (5) of the structure formulae respectively and at least one kind of cross-linked structure selected from the group of cross-linked structures represented by the following groups (6) and (7) of the structure formulae respectively, which is insoluble in toluene, and has a cross-linked component insoluble in chloroform in a proportion of 1% by weight or more and phosphorus atoms in a content of 5.0 to 10.0% by weight;

[C. 6]

Group (3) of the structure formulae

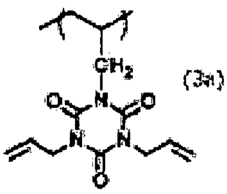
(3a)

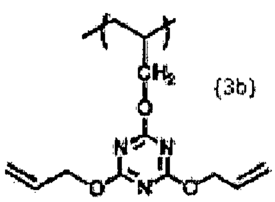
(3b)

.

[C. 7]

Group (4) of the structure formulae

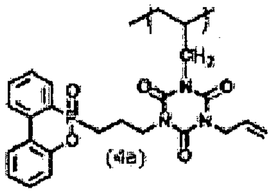
(4a)

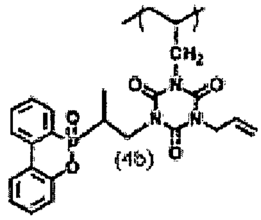
(4b)

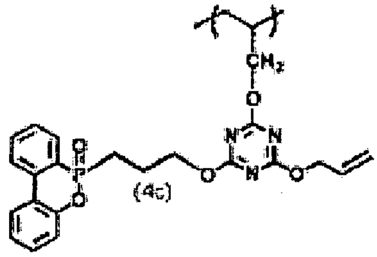
(4c)

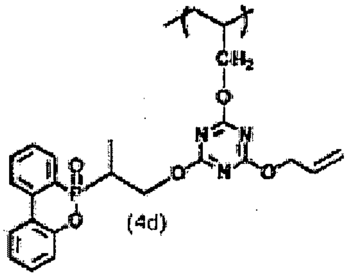
(4d)

;

[C. 8]

Group (5) of the structure formulae

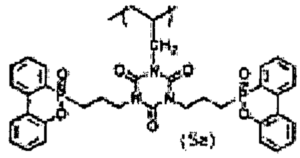
(5a)

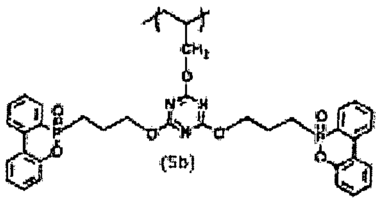
(5b)

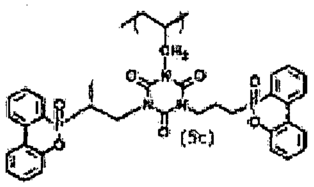
(5c)

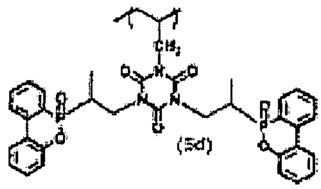
(5d)

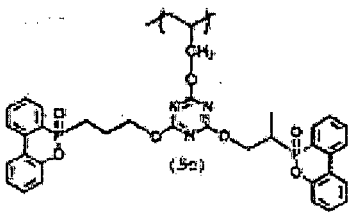
(5e)

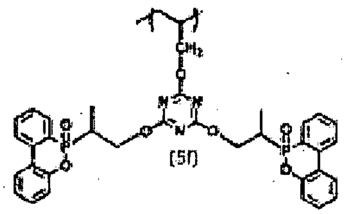
(5f)

.

[C. 9]

Group (6) of the structure formulae

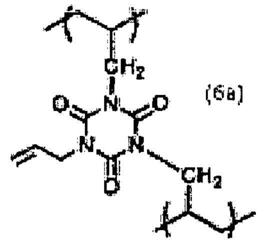
(6a)

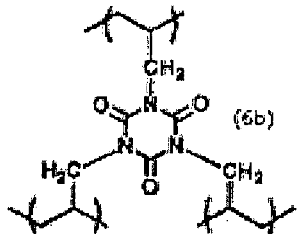
(6b)

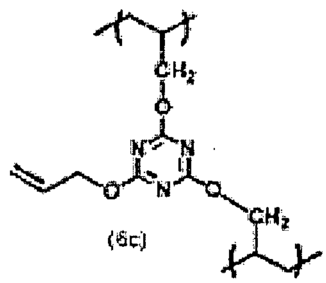
(6c)

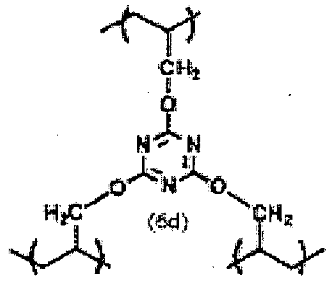
(6d)

;

[C. 10]

Group (7) of the structure formulae

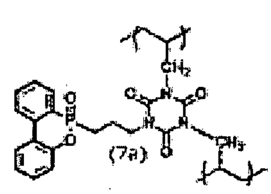
(7a)

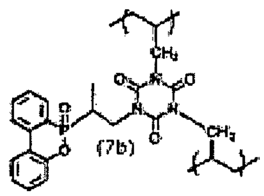
(7b)

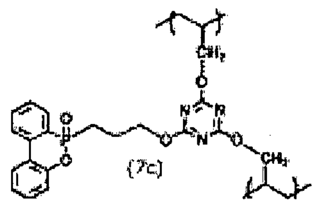
(7c)

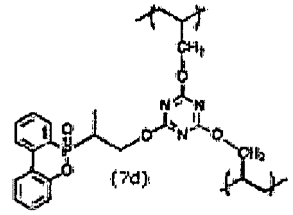
(7d)

.

6. The flame-retardant resin composition according to any one of claims 1 to 5, wherein the thermoplastic resin (A) is at least one resin selected from the group consisting of a polyester resin, a polyamide resin, a polycarbonate resin, and a modified polyphenylene oxide resin, and the component (C) is the flame retardant promoter ($C_x$).

7. The flame-retardant resin composition according to any one of claims 1 to 6, wherein the flame retardant promoter ($C_x$) is at least one compound selected from the group consisting of a nitrogen-containing compound, a metal hydroxide, a metal oxide, a boron compound, a tin compound, and a zinc compound.

8. The flame-retardant resin composition according to any one of claims 1 to 5, wherein the thermoplastic resin (A) is a thermoplastic polyamide resin having a melting point of 240°C or higher, and the component (C) is the impact modifier ($C_y$).

9. The flame-retardant resin composition according to any one of claims 1 to 5, wherein the thermoplastic resin (A) is a thermoplastic polyamide resin having a melting point of 240°C or higher, and the component (C) is the layered

compound ($C_z$).

**10.** The flame-retardant resin composition according to claim 8 or 9, wherein the thermoplastic polyamide resin having a melting point of 240°C or higher is at least one resin selected from the group consisting of nylon 46, nylon 4T, modified nylon 6T, nylon 9T, and nylon XD6.

**11.** The flame-retardant resin composition according to any one of claims 1 to 5, 8, and 10, wherein the impact modifier ($C_y$) is at least one modifier selected from the group consisting of a polyolefin impact modifier, a hydrogenated styrene thermoplastic elastomer, a polyester elastomer, a polyamide elastomer, a butadiene impact modifier, an acrylic impact modifier, and a silicone impact modifier.

**12.** The flame-retardant resin composition according to any one of claims 1 to 5, 9, and 10, wherein the layered compound ($C_z$) is treated with a polyether compound having a cyclic hydrocarbon group.

**13.** The flame-retardant resin composition according to claim 12, wherein the polyether compound having a cyclic hydrocarbon group is a polyether compound having units represented by the following general formula (8);

[C. 11]

Structure formula (8)

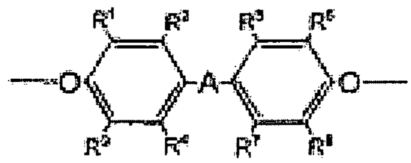

wherein -A- is -O-, -S-, -SO-, $-SO_2-$, -CO-, an alkylene group having 1 to 20 carbon atoms or an alkylidene group having 6 to 20 carbon atoms; and $R^1$, $R^2$, $R^3$, $R^4$, $R^5$, $R^6$, $R^7$, and $R^8$ are the same or different, and each is a hydrogen atom, a halogen atom, or a monovalent hydrocarbon group having 1 to 5 carbon atoms.

**14.** The flame-retardant resin composition according to any one of claims 1 to 13, which further comprises a phosphorus flame retardant (D) other than the flame retardant (B).

**Patentansprüche**

**1.** Eine flammhemmende Harzzusammensetzung, umfassend

(A) ein thermoplastisches Harz;
(B) ein Flammschutzmittel, welches ein Reaktionsprodukt von mindestens einer Stickstoff enthaltenden Verbindung, ausgewählt aus der Gruppe von Stickstoff enthaltenden Verbindungen, dargestellt durch die folgende Gruppe (1) der Strukturformeln, und einer Phosphor enthaltenden Verbindung, dargestellt durch die folgende Strukturformel (2), umfasst, welches in Toluol unlöslich ist und einen Gehalt an Phosphoratomen von 5,0 bis 10,0 Gew.-% aufweist,

wobei das Flammschutzmittel (B) durch ein Verfahren hergestellt ist, welches einen Schritt beinhaltet, in welchem ein Gemisch, das die Stickstoff enthaltende Verbindung : der Phosphor enthaltenden Verbindung in einem molaren Verhältnis von 1:1,0 bis 2,5 umfasst, mit einer Rate von 1°C bis 100°C/Stunde in einer Stickstoffatmosphäre auf eine Temperatur von 180°C bis 240°C gebracht wird,
und
wobei das Flammschutzmittel (B) ein Polymer umfasst, welches mindestens eine Art von Wiederholungseinheiten, ausgewählt aus den ersten bis dritten Gruppen von Wiederholungseinheiten, dargestellt durch die folgenden Gruppen (3) bis (5) der Strukturformeln, aufweist; und

(C) mindestens eine Komponente, ausgewählt aus der Gruppe bestehend aus einem Flammschutzmittelpromoter ($C_x$), einem Schlagmodifizierungsmittel ($C_y$) und einer Schichtverbindung ($C_z$);

[C.1]

Gruppe (1) der Strukturformeln

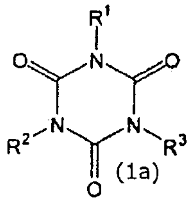
(1a)

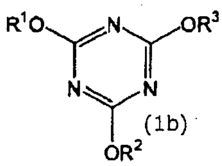
(1b)

wobei zwei oder mehrere von $R^1$, $R^2$ und $R^3$ eine eine ungesättigte Bindung enthaltende Gruppe sind und die anderen ein Wasserstoffatom oder eine organische Gruppe, die von der eine ungesättigte Bindung enthaltenden Gruppe verschieden ist, darstellen;

[C.2]

Strukturformel (2)

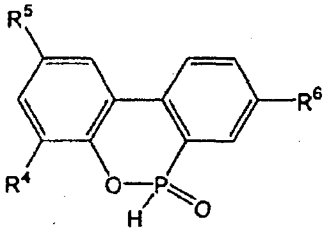

wobei $R^4$, $R^5$ und $R^6$ gleich oder verschieden sind und jedes ein Wasserstoffatom, eine Alkylgruppe, eine Cycloalkylgruppe, eine Arylgruppe oder eine Aralkylgruppe darstellt;

[C.3]

Gruppe (3) der Strukturformeln

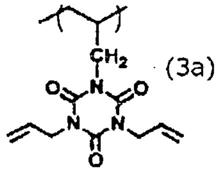
(3a)

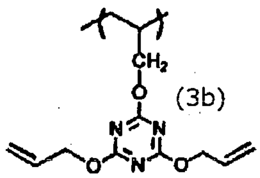
(3b)

;

[C.4]

Gruppe (4) der Strukturformeln

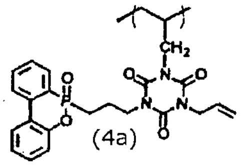
(4a)
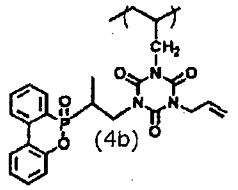
(4b)
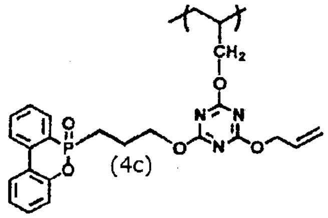
(4c)
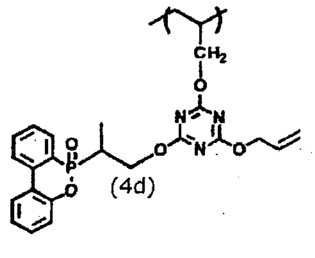
(4d)

;

[C.5]

Gruppe (5) der Strukturformeln

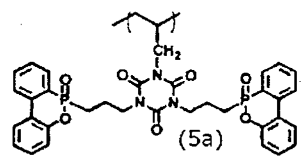
(5a)
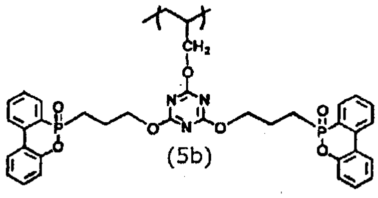
(5b)
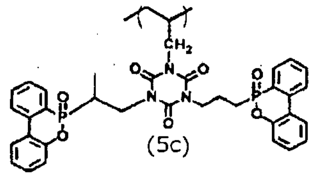
(5c)
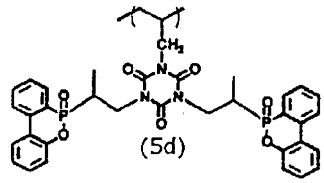
(5d)
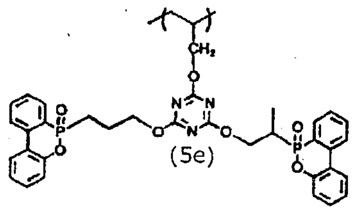
(5e)
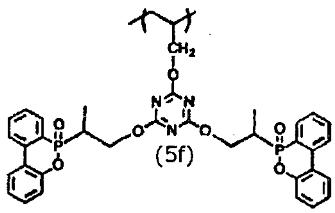
(5f)

.

2. Die flammhemmende Harzzusammensetzung gemäß Anspruch 1, wobei das Flammschutzmittel (B) ein Gewichtsmittel des Molekulargewichts ($M_w$) von 2.000 bis 10.000 aufweist.

3. Die flammhemmende Harzzusammensetzung gemäß Anspruch 1 oder 2, wobei das Flammschutzmittel (B) eine vernetzte Komponente beinhaltet, wobei die vernetzte Komponente in einem Anteil von 1 Gew.-% oder mehr der Gesamtmenge des Flammschutzmittels (B) enthalten ist.

4. Die flammhemmende Harzzusammensetzung gemäß Anspruch 3, wobei die vernetzte Komponente eine Komponente ist, welche in Chloroform unlöslich ist.

5. Die flammhemmende Harzzusammensetzung gemäß Anspruch 1, wobei das Flammschutzmittel (B) ein Polymer beinhaltet, welches mindestens eine Art von Wiederholungseinheiten, ausgewählt aus den ersten bis dritten Gruppen

von Wiederholungseinheiten, dargestellt jeweils durch die folgenden Gruppen (3) bis (5) der Strukturformeln, und mindestens eine Art von vernetzter Struktur, ausgewählt aus der Gruppe von vernetzten Strukturen dargestellt durch die folgenden Gruppen (6) und (7) der Strukturformeln, aufweist, welches in Toluol unlöslich ist und eine vernetzte Komponente, welche in Chloroform unlöslich ist, in einem Anteil von 1 Gew.-% oder mehr und Phosphoratome in einem Anteil von 5,0 bis 10,0 Gew.-% aufweist;

[C.6]

Gruppe (3) der Strukturformeln

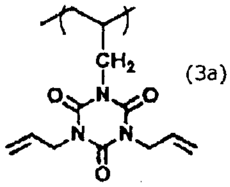
(3a)

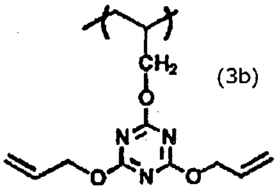
(3b)

;

[C.7]

Gruppe (4) der Strukturformeln

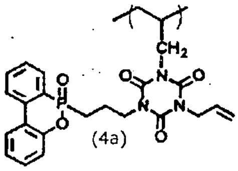
(4a)

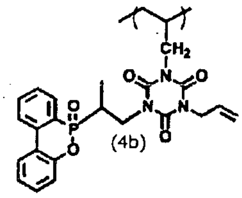
(4b)

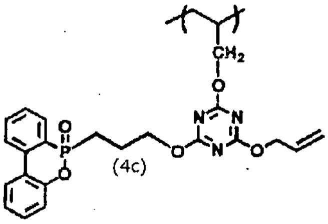
(4c)

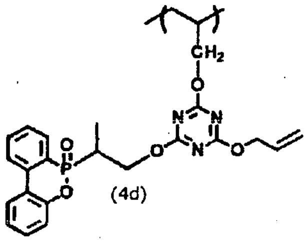
(4d)

;

[C.8]

Gruppe (5) der Strukturformeln

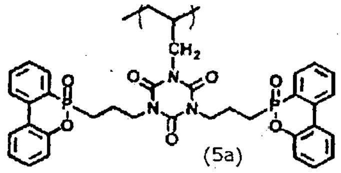
(5a)

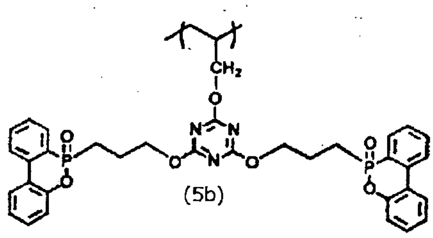
(5b)

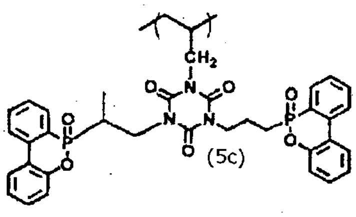
(5c)

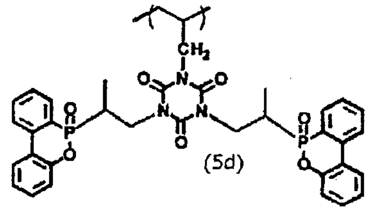
(5d)

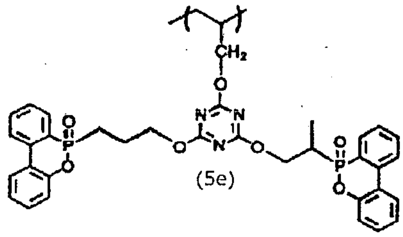
(5e)

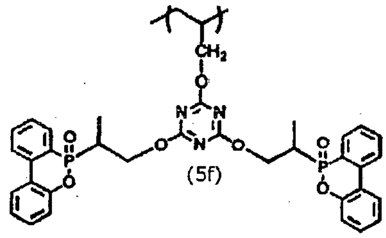
(5f)

;

[C.9]

Gruppe (6) der Strukturformeln

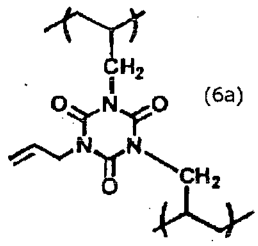
(6a)

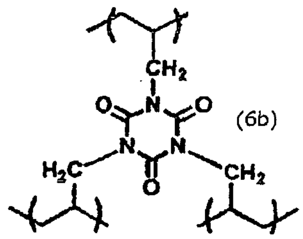
(6b)

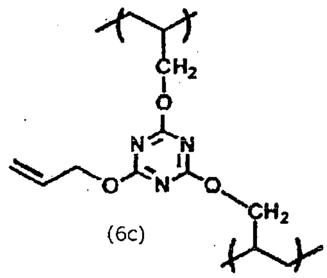
(6c)

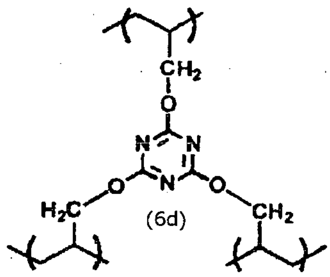
(6d)

;

[C.10]

Gruppe (7) der Strukturformeln

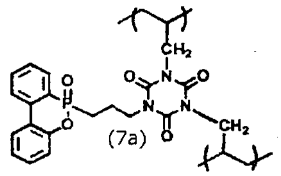

(7a)

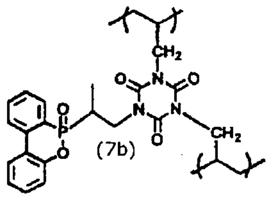

(7b)

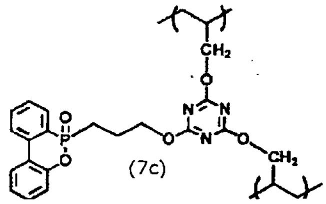

(7c)

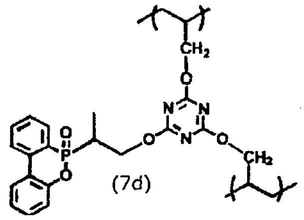

(7d)

**6.** Die flammhemmende Harzzusammensetzung gemäß einem der Ansprüche 1 bis 5, wobei das thermoplastische Harz (A) mindestens ein Harz, ausgewählt aus der Gruppe bestehend aus einem Polyesterharz, einem Polyamidharz, einem Polycarbonatharz und einem modifizierten Polyphenylenoxidharz, ist und die Komponente (C) der Flammschutzmittelpromoter ($C_x$) ist.

**7.** Die flammhemmende Harzzusammensetzung gemäß einem der Ansprüche 1 bis 6, wobei der Flammschutzmittelpromoter ($C_x$) mindestens eine Verbindung, ausgewählt aus der Gruppe bestehend aus einer Stickstoff enthaltenden Verbindung, einem Metallhydroxid, einem Metalloxid, einer Borverbindung, einer Zinnverbindung und einer Zinkverbindung, ist.

**8.** Die flammhemmende Harzzusammensetzung gemäß einem der Ansprüche 1 bis 5, wobei das thermoplastische Harz (A) ein thermoplastisches Polyamidharz mit einem Schmelzpunkt von 240°C oder höher ist und die Komponente (C) das Schlagmodifizierungsmittel ($C_y$) ist.

**9.** Die flammhemmende Harzzusammensetzung gemäß einem der Ansprüche 1 bis 5, wobei das thermoplastische Harz (A) ein thermoplastisches Polyamidharz mit einem Schmelzpunkt von 240°C oder höher ist und die Komponente (C) die Schichtverbindung ($C_z$) ist.

**10.** Die flammhemmende Harzzusammensetzung gemäß Anspruch 8 oder 9, wobei das thermoplastische Polyamidharz mit einem Schmelzpunkt von 240°C oder höher mindestens ein Harz, ausgewählt aus der Gruppe bestehend aus Nylon 46, Nylon 4T, modifiziertem Nylon 6T, Nylon 9T und Nylon XD6, ist.

**11.** Die flammhemmende Harzzusammensetzung gemäß einem der Ansprüche 1 bis 5, 8 und 10, wobei das Schlagmodifizierungsmittel ($C_y$) mindestens ein Modifzierungsmittel, ausgewählt aus der Gruppe bestehend aus einem Polyolefinschlagmodifzierungsmittel, einem hydrogenierten thermoplastischen Styrolelastomer, einem Polyesterelastomer, einem Polyamidelastomer, einem Butadienschlagmodifizierungsmittel, einem Acrylschlagmodifizierungsmittel und einem Silikonschlagmodifizierungsmittel, ist.

**12.** Die flammhemmende Harzzusammensetzung gemäß einem der Ansprüche 1 bis 5, 9 und 10, wobei die Schichtverbindung ($C_z$) mit einer Polyetherverbindung, welche eine cyclische Kohlenwasserstoffgruppe aufweist, behandelt ist.

**13.** Die flammhemmende Harzzusammensetzung gemäß Anspruch 12, wobei die Polyetherverbindung mit einer cyclischen Kohlenwasserstoffgruppe eine Polyetherverbindung ist; welche Einheiten, dargestellt durch die folgende allgemeine Formel (8), aufweist;

[C.11]

Strukturformel (8)

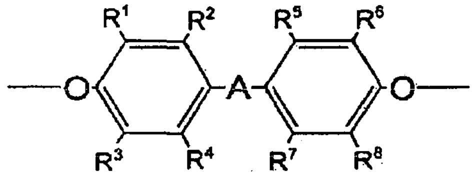

wobei -A- für -O-, -S-, -SO-, $-SO_2-$, -CO-, eine Alkylengruppe mit 1 bis 20 Kohlenstoffatomen oder eine Alkylidengruppe mit 6 bis 20 Kohlenstoffatomen steht; und $R^1$, $R^2$, $R^3$, $R^4$, $R^5$, $R^6$, $R^7$ und $R^8$ gleich oder verschieden sind und jeweils ein Wasserstoffatom, ein Halogenatom oder eine einwertige Kohlenwasserstoffgruppe mit 1 bis 5 Kohlenstoffatomen darstellen.

**14.** Die flammhemmende Harzzusammensetzung gemäß einem der Ansprüche 1 bis 13, welche ferner ein Phosphor-Flammschutzmittel (D), das vom Flammschutzmittel (B) verschieden ist, umfasst.

**Revendications**

**1.** Composition de résine ignifuge comprenant

(A) une résine thermoplastique ;
(B) un agent ignifugeant comprenant un produit réactionnel d'au moins un composé contenant de l'azote choisi dans le groupe des composés contenant de l'azote représentés par le groupe (1) suivant des formules structurelles et un composé contenant du phosphore représenté par la formule structurelle (2) suivante, qui est insoluble dans le toluène et a une teneur en atomes de phosphore de 5,0 à 10,0 % en poids,

dans laquelle l'agent ignifugeant (B) est produit par une méthode qui comprend une étape dans laquelle un mélange comprenant le composé contenant de l'azote et le composé contenant du phosphore selon un rapport molaire de 1:1,0 à 2,5 est chauffé à une température de 180 °C à 240 °C à une vitesse de 1 °C à 100 °C/heure sous une atmosphère d'azote, et
dans laquelle l'agent ignifugeant (B) comprend un polymère ayant au moins un type de motifs répétitifs choisi parmi les premier à troisième groupes de motifs répétitifs représentés respectivement par les groupes (3) à (5) suivants des formules structurelles ; et

(C) au moins un composant choisi dans le groupe constitué par un promoteur ($C_x$) pour l'agent ignifugeant, un modifiant choc ($C_y$) et un composé stratifié ($C_z$) ;

[C.1]

Groupe (1) de formules structurelles

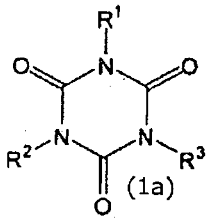
(1a)

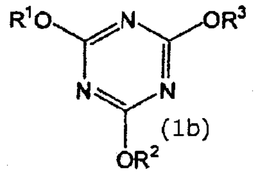
(1b)

dans lesquelles deux de $R^1$, $R^2$ et $R^3$ ou plus sont un groupe contenant une liaison insaturée et les autres sont un atome d'hydrogène ou un groupe organique autre que le groupe contenant une liaison insaturée ;

[C.2]

Formule structurelle (2)

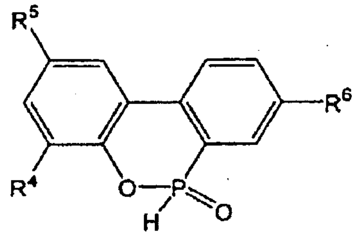

dans laquelle $R^4$, $R^5$ et $R^6$ sont identiques ou différents, et chacun est un atome d'hydrogène, un groupe alkyle, un groupe cycloalkyle, un groupe aryle ou un groupe aralkyle ;

[C.3]

Groupe (3) des formules structurelles

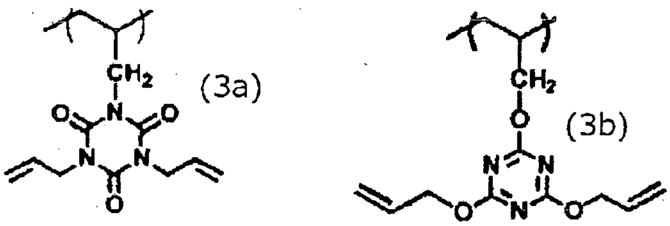

(3a) (3b)

;

[C.4]

Groupe (4) des formules structurelles

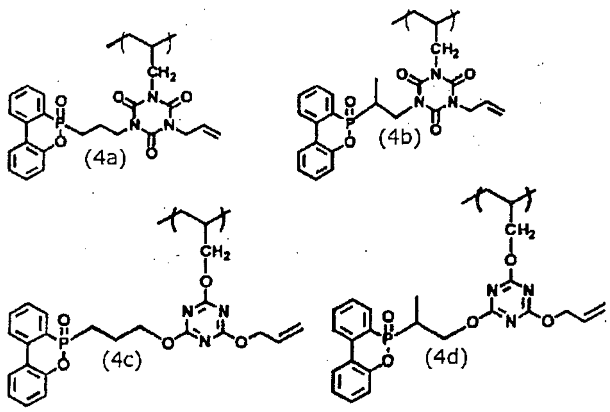

(4a) (4b) (4c) (4d)

;

[C.5]

Groupe (5) des formules structurelles

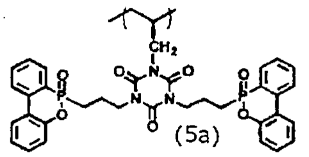
(5a)
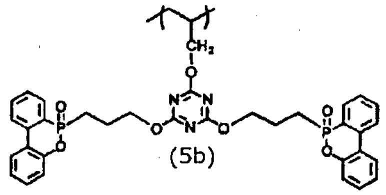
(5b)
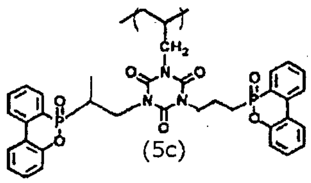
(5c)
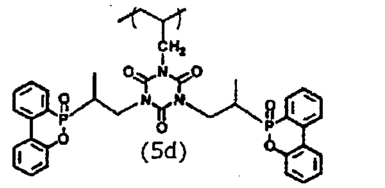
(5d)
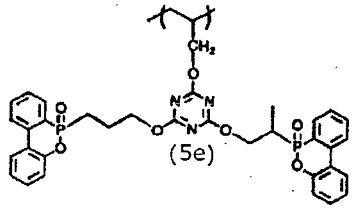
(5e)
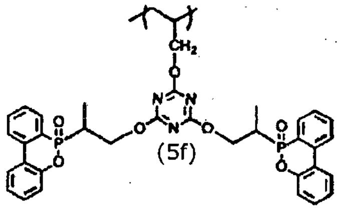
(5f)

**2.** Composition de résine ignifuge selon la revendication 1, dans laquelle l'agent ignifugeant (B) a une masse moléculaire moyenne en masse ($M_m$) de 2000 à 10 000.

**3.** Composition de résine ignifuge selon la revendication 1 ou 2, dans laquelle l'agent ignifugeant (B) comprend un composant réticulé, le composant réticulé étant contenu en une proportion de 1 % en poids ou plus de la quantité totale de l'agent ignifugeant (B).

**4.** Composition de résine ignifuge selon la revendication 3, dans laquelle le composant réticulé est un composant qui est insoluble dans le chloroforme.

**5.** Composition de résine ignifuge selon la revendication 1, dans laquelle l'agent ignifugeant (B) comprend un polymère ayant au moins un type de motifs répétitifs choisi parmi les premier à troisième groupes de motifs répétitifs représentés respectivement par les groupes (3) à (5) suivants des formules structurelles et au moins un type de structure réticulée choisie dans le groupe des structures réticulées représentées respectivement par les groupes (6) et (7) suivants des formules structurelles, qui est insoluble dans du toluène et a un composant réticulé insoluble dans le chloroforme en une proportion de 1 % en poids ou plus et des atomes de phosphore en une teneur de 5,0 à 10,0 % en poids ;

[C.6]

Groupe (3) des formules structurelles

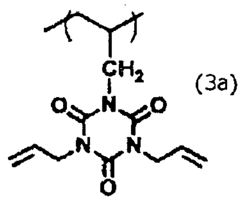
(3a)
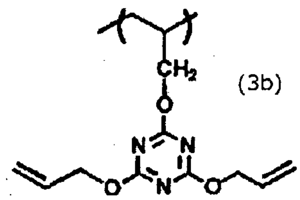
(3b)

;

[C.7]

Groupe (4) des formules structurelles

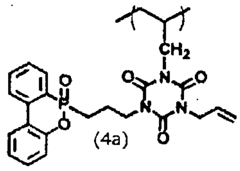
(4a)

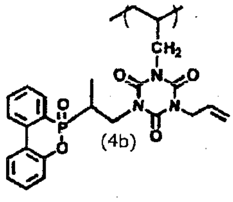
(4b)

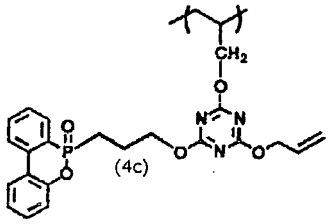
(4c)

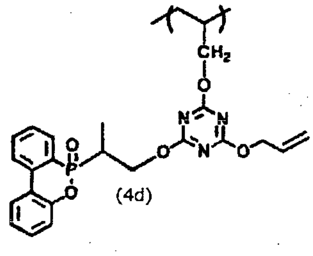
(4d)

;

[C.8]

Groupe (5) des formules structurelles

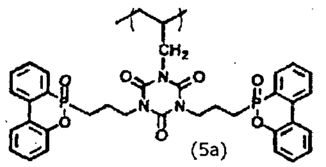
(5a)

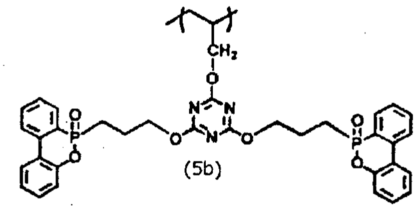
(5b)

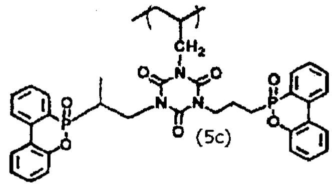
(5c)

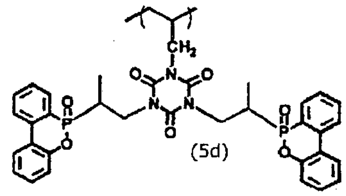
(5d)

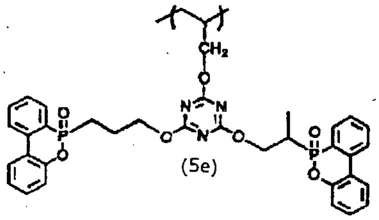
(5e)

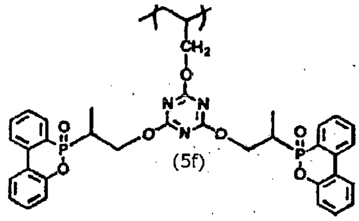
(5f)

[C.9]

Groupe (6) des formules structurelles

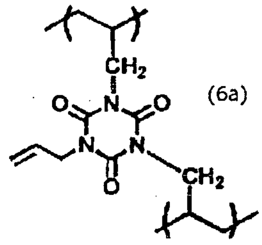

(6a)

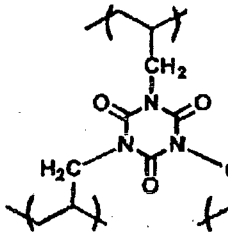

(6b)

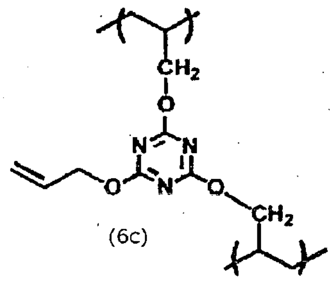

(6c)

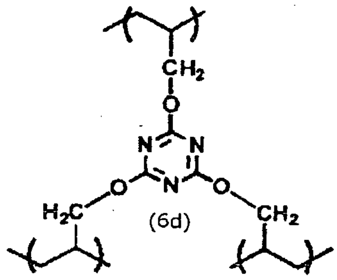

(6d)

;

[C.10]

Groupe (7) des formules structurelles

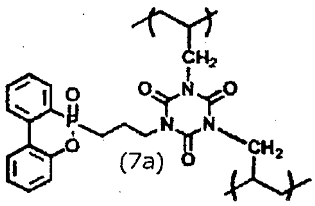

(7a)

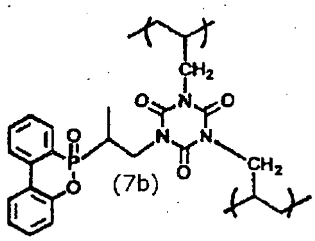

(7b)

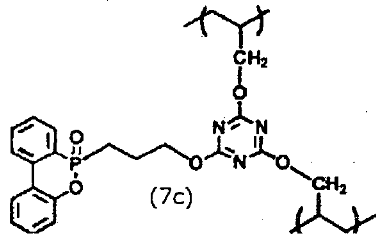

(7c)

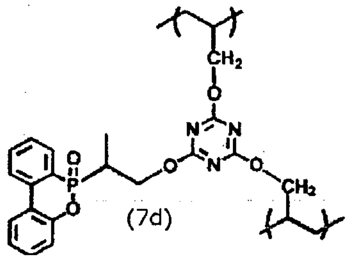

(7d)

**6.** Composition de résine ignifuge selon l'une quelconque des revendications 1 à 5, dans laquelle la résine thermoplastique (A) est au moins une résine choisie dans le groupe constitué par une résine de polyester, une résine de polyamide, une résine de polycarbonate et une résine d'oxyde de polyphénylène modifié, et le composant (C) est le promoteur ($C_x$) pour l'agent ignifugeant.

**7.** Composition de résine ignifuge selon l'une quelconque des revendications 1 à 6, dans laquelle le promoteur ($C_x$) pour l'agent ignifugeant est au moins un composé choisi dans le groupe constitué par un composé contenant de l'azote, un hydroxyde de métal, un oxyde de métal, un composé à base de bore, un composé à base d'étain et un composé à base de zinc.

**8.** Composition de résine ignifuge selon l'une quelconque des revendications 1 à 5, dans laquelle la résine thermoplastique (A) est une résine de polyamide thermoplastique ayant un point de fusion supérieur ou égal à 240 °C, et le composant (C) est le modifiant choc ($C_y$).

**9.** Composition de résine ignifuge selon l'une quelconque des revendications 1 à 5, dans laquelle la résine thermoplastique (A) est une résine de polyamide thermoplastique ayant un point de fusion supérieur ou égal à 240 °C, et le composant (C) est le composé stratifié ($C_z$).

**10.** Composition de résine ignifuge selon la revendication 8 ou 9, dans laquelle la résine de polyamide thermoplastique ayant un point de fusion supérieur ou égal à 240 °C est au moins une résine choisie dans le groupe constitué par le nylon 46, le nylon 4T, le nylon 6T modifié, le nylon 9T et le nylon XD6.

**11.** Composition de résine ignifuge selon l'une quelconque des revendications 1 à 5, 8 et 10, dans laquelle le modifiant choc ($C_y$) est au moins un modifiant choisi dans le groupe constitué par un modifiant choc à base de polyoléfine, un élastomère thermoplastique de styrène hydrogéné, un élastomère de polyester, un élastomère de polyamide, un modifiant choc à base de butadiène, un modifiant choc à base acrylique et un modifiant choc à base de silicone.

**12.** Composition de résine ignifuge selon l'une quelconque des revendications 1 à 5, 9 et 10, dans laquelle le composé stratifié ($C_z$) est traité avec un composé de polyéther ayant un groupe hydrocarboné cyclique.

**13.** Composition de résine ignifuge selon la revendication 12, dans laquelle le composé de polyéther ayant un groupe hydrocarboné cyclique est un composé de polyéther ayant des motifs représentés par la formule générale (8) suivante ;

[C.11]

Formule structurelle (8)

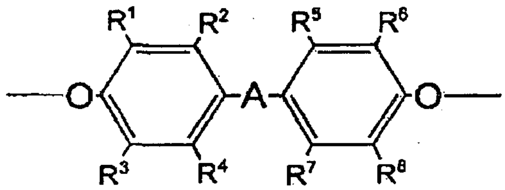

dans laquelle -A- est -O-, -S-, -SO-, $-SO_2-$, -CO-, un groupe alkylène ayant de 1 à 20 atomes de carbone ou un groupe alkylidène ayant de 6 à 20 atomes de carbone ; et $R^1$, $R^2$, $R^3$, $R^4$, $R^5$, $R^6$, $R^7$ et $R^8$ sont identiques ou différents, et chacun est un atome d'hydrogène, un atome d'halogène ou un groupe hydrocarboné monovalent ayant de 1 à 5 atomes de carbone.

**14.** Composition de résine ignifuge selon l'une quelconque des revendications 1 à 13, qui comprend en outre un agent ignifugeant à base de phosphore (D) qui est différent de l'agent ignifugeant (B).

[Fig. 1]

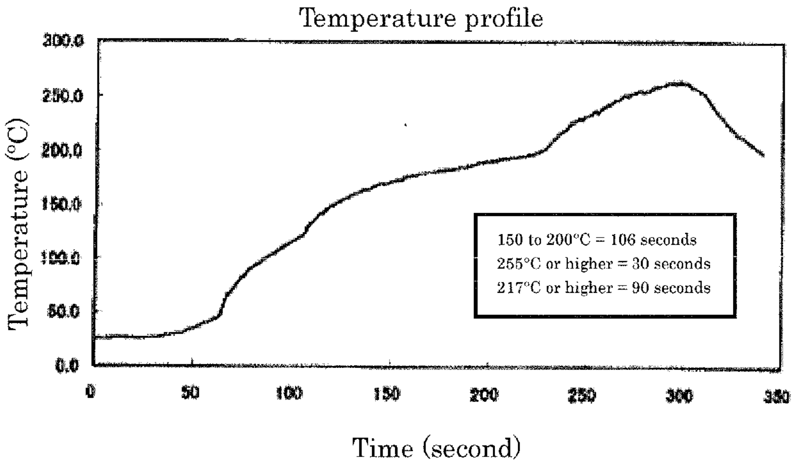
Temperature profile
300.0
250.0
200.0
150.0
100.0
50.0
0.0
Temperature (°C)
0
50
100
150
200
250
300
350
Time (second)
150 to 200°C = 106 seconds
255°C or higher = 30 seconds
217°C or higher = 90 seconds

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006063258 A
- JP H02182707 A
- WO 2007040075 A